(19) Europäisches Patentamt / European Patent Office / Office européen des brevets

(11) **EP 4 280 499 A1**

(12) **EUROPEAN PATENT APPLICATION**
published in accordance with Art. 153(4) EPC

(43) Date of publication:
**22.11.2023 Bulletin 2023/47**

(21) Application number: **22739592.8**

(22) Date of filing: **07.01.2022**

(51) International Patent Classification (IPC):
**H04L 1/18** *(2023.01)* **H04L 1/00** *(2006.01)*
**H04L 5/00** *(2006.01)* **H04W 72/04** *(2023.01)*

(52) Cooperative Patent Classification (CPC):
**H04L 1/00; H04L 1/18; H04L 5/00; H04W 72/04**

(86) International application number:
**PCT/KR2022/000323**

(87) International publication number:
**WO 2022/154395 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 15.01.2021 KR 20210006235
07.05.2021 KR 20210059548
30.09.2021 KR 20210130271
15.11.2021 US 202163279647 P

(71) Applicant: **LG Electronics Inc.**
**Yeongdeungpo-gu**
**Seoul 07336 (KR)**

(72) Inventors:
• **YANG, Suckchel**
**Seoul 06772 (KR)**
• **KIM, Seonwook**
**Seoul 06772 (KR)**
• **BAE, Duckhyun**
**Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD AND APPARATUS FOR TRANSMITTING AND RECEIVING SIGNAL IN WIRELESS COMMUNICATION SYSTEM**

(57)  A user equipment according to an embodiment of the present disclosure may receive DCI including a priority indicator and at least one DAI and transmit an uplink signal including an HARQ-ACK codebook on the basis of the DCI, and when the priority indicator included in the DCI indicates a first priority but the DCI includes a DAI related to a second priority different from the first priority, the user equipment may determine each of a first sub-codebook related to the first priority and a second sub-codebook related to the second priority, and determine the HARQ-ACK codebook on the basis of the first sub-codebook and the second sub-codebook.

**FIG. 12**

EP 4 280 499 A1

**Description**

**TECHNICAL FIELD**

The present disclosure relates to a wireless communication system, and more particula rly, to a method and apparatus for transmitting or receiving a downlink/uplink radio signal in a wireless communication system.

**BACKGROUND**

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

In an aspect of the present disclosure, there is provided a method of transmitting a signal by a user equipment (UE) in a wireless communication system. The method may include: receiving downlink control information (DCI) including a priority indicator and at least one downlink assignment index (DAI); determining a hybrid automatic repeat request acknowledgment (HARQ-ACK) codebook based on the DCI; and transmitting an uplink (UL) signal including the HARQ-ACK codebook. Based on that the priority indicator included in the DCI indicates a first priority but the DCI includes a DAI related to a second priority different from the first priority, the UE may be configured to determine a first sub-codebook related to the first priority and a second sub-codebook related to the second priority and determine the HARQ-ACK codebook based on the first sub-codebook and the second sub-codebook.

The second priority may be lower than the first priority.

The DAI related to the second priority may represent an accumulated scheduling number of transport block based physical downlink shared channels (TB-based PDSCHs) for which the second priority is indicated or no priority is indicated.

A size of acknowledgement/negative acknowledgement (ACK/NACK) bits for the TB-based PDSCHs for which the second priority or no priority is indicated may be determined based on the DAI related to the second priority. The second sub-codebook may be determined based on the determination of the size of the ACK/NACK bits for the TB-based PDSCHs.

The DAI related to the second priority may represent only the accumulated scheduling number of the TB-based PDSCHs for which the second priority is indicated or no priority is indicated, except for an accumulated scheduling number of code block group based physical downlink shared channels (CBG-based PDSCHs) for which the second priority is indicated or no priority is indicated.

The UE may be configured to omit ACK/NACK bits for the CBG-based PDSCHs for which the second priority or no priority is indicated from the HARQ-ACK codebook.

ACK/NACK bits for the CBG-based PDSCHs for which the second priority or no priority is indicated may be determined based on last downlink (DL) grant DCI received by the UE among DL grant DCIs scheduling the CBG-based PDSCHs for which the second priority or no priority is indicated. The HARQ-ACK codebook may be configured to include the determined ACK/NACK bits.

The DCI may include both a DAI related to the first priority and the DAI related to the second priority.

The DAI related to the second priority may include a total DAI representing a total downlink (DL) scheduling number related to the second priority at a corresponding timing.

The DCI may be DL grant DCI for DL scheduling related to the first priority or UL grant DCI for scheduling of the UL signal including a physical uplink shared channel (PUSCH).

The HARQ-ACK codebook may be a Type-2 HARQ-ACK codebook in a 3rd generation partnership project (3GPP) based wireless communication system.

The UE may be configured to determine the HARQ-ACK codebook by concatenating the first sub-codebook related to the first priority and the second sub-codebook related to the second priority.

In another aspect of the present disclosure, there is provided a processor-readable storage medium configured to store a program for executing the above-described signal transmission method.

In another aspect of the present disclosure, there is provided a UE configured to perform the above-described signal transmission method.

In another aspect of the present disclosure, there is provided a device configured to control a UE performing the above-described signal transmission method.

In another aspect of the present disclosure, there is provided a method of receiving a signal by a base station (BS) in a wireless communication system. The method may include: transmitting DCI including a priority indicator and at least one DAI; and receiving a UL signal including a HARQ-ACK codebook based on the DCI. Based on that the priority indicator included in the DCI indicates a first priority but the DCI includes a DAI related to a second priority different from the first priority, the BS may be configured to determine a payload size of each of a first sub-codebook related to the first priority and a second sub-codebook related to the second priority and obtain the first sub-codebook and the second sub-codebook from the HARQ-ACK codebook based on the payload size of each of the first sub-codebook and the second sub-codebook.

In a further aspect of the present disclosure, there is provided a BS configured to perform the above-described signal reception method.

## ADVANTAGEOUS EFFECTS

According to the present disclosure, wireless signal transmission and reception may be efficiently performed in a wireless communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:

FIG. 1 illustrates physical channels used in a 3rd generation partnership project (3GPP) system as an exemplary wireless communication system, and a general signal transmission method using the same;
FIG. 2 illustrates a radio frame structure;
FIG. 3 illustrates a resource grid of a slot;
FIG. 4 illustrates exemplary mapping of physical channels in a slot;
FIG. 5 illustrates an exemplary acknowledgment/negative acknowledgment (ACK/NACK) transmission process;
FIG. 6 illustrates an exemplary physical uplink shared channel (PUSCH) transmission process;
FIG. 7 illustrates an example of multiplexing control information in a PUSCH;
FIGS. 8 to 12 are diagrams illustrating a method of transmitting and receiving a signal according to an embodiment of the present disclosure;
FIGS. 13 to 16 are diagrams illustrating an example of a communication system 1 and wireless devices applicable to the present disclosure; and
FIG. 17 is a diagram illustrating an example of a discontinuous reception (DRX) operation applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

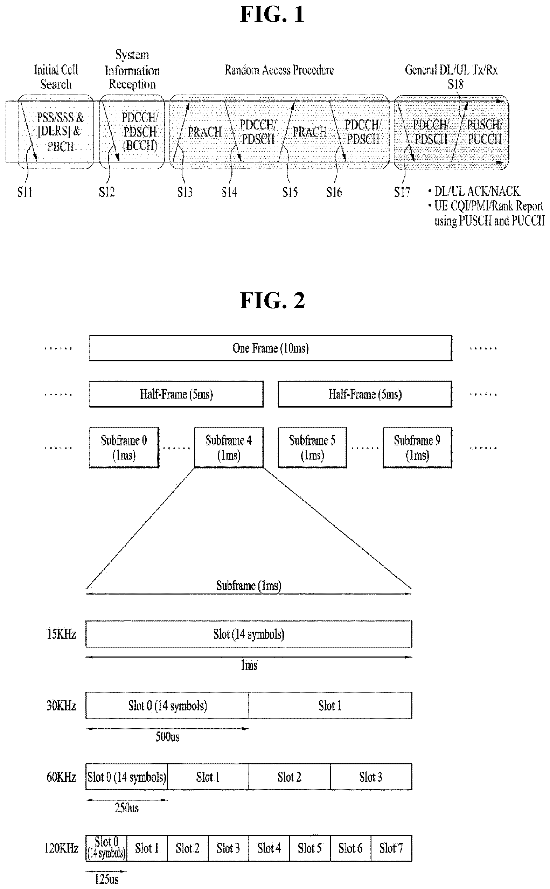

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |
| $N^{slot}_{symb}$: Number of symbols in a slot $N^{frame,u}_{slot}$: Number of slots in a frame $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

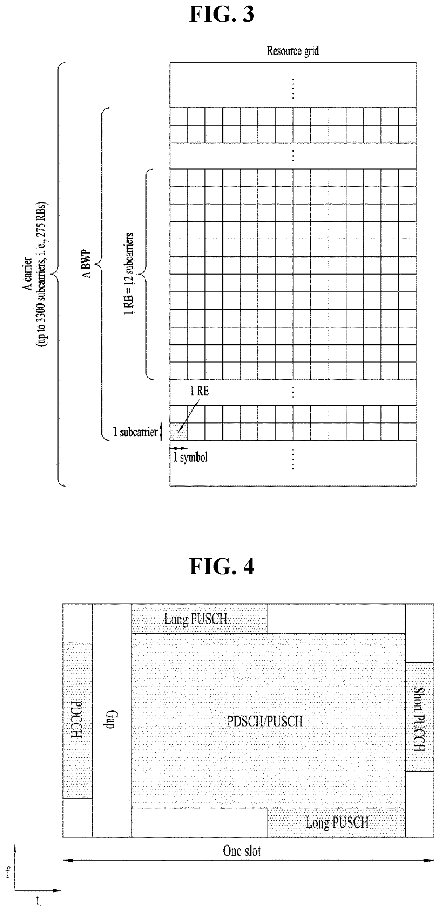

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

\* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

-    SR(Scheduling Request): Information used to request UL-SCH resources.
-    HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
-    CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS and conveys UCI of more than 2 bits. In other words, PUCCH resources of PUCCH format 3 include an OCC. Modulation symbols are transmitted in TDM with the DMRS.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

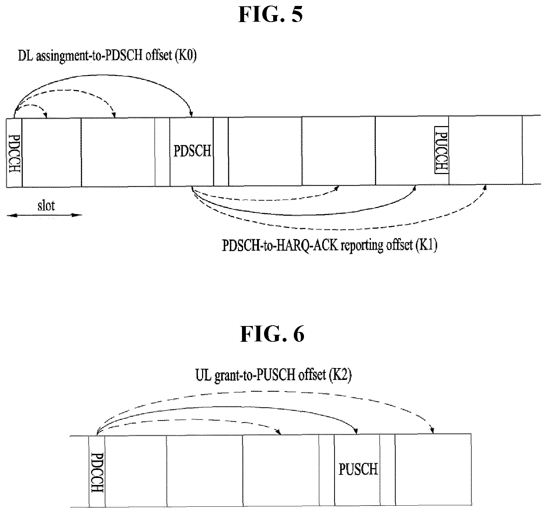

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH.
- Time domain resource assignment: Indicates K0 and the starting position (e.g., OFDM symbol index) and length (e.g., the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on ACK/NACK (A/N) bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the B S/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

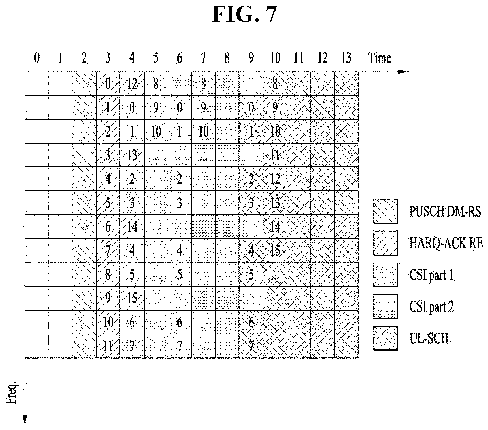

FIG. 7 illustrates exemplary multiplexing of UCI in a PUSCH. When a plurality of PUCCH resources overlap with a PUSCH resource in a slot and a PUCCH-PUSCH simultaneous transmission is not configured in the slot, UCI may be transmitted on a PUSCH (UCI piggyback or PUSCH piggyback), as illustrated. In the illustrated case of FIG. 7, an HARQ-ACK and CSI are carried in a PUSCH resource.

For piggyback of an HARQ-ACK in NR Rel. 16, when the payload of the HARQ-ACK is 2 or fewer bits, a PUSCH data RE (and/or a CSI part 2 RE) is punctured, whereas when the payload of the HARQ-ACK is larger than 2 bits, rate matching is performed. Table 6 describes HARQ-ACK rate matching of UCI in TS38.212.

[Table 6]

### 6.3.2.4 Rate matching

6.3.2.4.1 UCI encoded by Polar code

6.3.2.4.1.1 HARQ-ACK

For HARQ-ACK transmission on PUSCH with UL-SCH, the number of coded modulation symbols per 1 ayer for HARQ-ACK transmission, denoted as $Q'_{ACK}$, is determined as follows:

$$Q'_{ACK}=\min\left\{\left\lceil\frac{\left(O_{ACK}+L_{ACK}\right)\cdot\beta^{PUSCH}_{offset}\cdot\sum\limits_{l=0}^{N^{PUSCH}_{symball}-1}M^{UCI}_{sc}(l)}{\sum\limits_{r=0}^{C_{UL\text{-}SCH}-1}K_r}\right\rceil,\left\lceil\alpha\cdot\sum\limits_{l=l_0}^{N^{PUSCH}_{symball}-1}M^{UCI}_{sc}(l)\right\rceil\right\}$$

where

- $O_{ACK}$ is the number of HARQ-ACK bits;

- if $O_{ACK} \geq 360$, $L_{ACK}$ =11; otherwise $L_{ACK}$ is the number of CRC bits for HARQ-ACK determined according to Clause 6.3.1.2.1;

- $\beta^{PUSCH}_{offset} = \beta^{HARQ-ACK}_{offset}$ ;

- $C_{UL\text{-}SCH}$ is the number of code blocks for UL-SCH of the PUSCH transmission;

- if the DCI format scheduling the PUSCH transmission includes a CBGT1 field indicating that the UE shall not transmit the $r$-th code block, $K_{r=0}$; otherwise, $K_r$ is the r -th code block s ize for UL-SCH of the PUSCH transmission;

- $M^{PUSCH}_{sc}$ is the scheduled bandwidth of the PUSCH transmission, expressed as a number of s ubcarriers;

- $M^{PT\text{-}RS}_{sc}(l)$ is the number of subcarriers in OFDM symbol $l$ that carries PTRS, in the PUSC H transmission;

### 6.3.2.4 Rate matching

6.3.2.4.1 UCI encoded by Polar code

6.3.2.4.1.1 HARQ-ACK

- $M_{sc}^{UCI}(l)$ is the number of resource elements that can be used for transmission of UCI in OFDM symbol *l*, for $l = 0, 1, 2, ..., N_{symb,all}^{PUSCH} - 1$, in the PUSCH transmission and $N_{symb,all}^{PUSCH}$ is the total number of OFDM symbols of the PUSCH, including all OFDM symbol s used for DMRS;

- for any OFDM symbol that carries DMRS of the PUSCH, $M_{sc}^{UCI}(l) = 0$ ;

- for any OFDM symbol that does not carry DMRS of the PUSCH,

$$M_{sc}^{UCI}(l) = M_{sc}^{PUSCH} - M_{sc}^{PT-RS}(l);$$

- $\alpha$ is configured by higher layer parameter *scaling;*

- $l_0$ is the symbol index of the first OFDM symbol that does not carry DMRS of the PUSCH, afte r the first DMRS symbol(s), in the PUSCH transmission.

For HARQ-ACK transmission on an actual repetition of a PUSCH with repetition Type B with UL-SCH, t he number of coded modulation symbols per layer for HARQ-ACK transmission, denoted as $Q'_{ACK}$, is d etermined as follows:

$$Q'_{ACK} = \min \left\{ \left\lceil \frac{(O_{ACK} + L_{ACK}) \cdot \beta_{offset}^{PUSCH} \cdot \sum_{l=0}^{N_{symb,nominal}^{PUSCH}-1} M_{sc,nominal}^{UCI}(l)}{\sum_{r=0}^{C_{UL-SCH}-1} K_r} \right\rceil, \left\lceil \alpha \cdot \sum_{l=0}^{N_{symb,nominal}^{PUSCH}-1} M_{sc,nominal}^{UCI}(l) \right\rceil, \sum_{l=0}^{N_{symb,actual}^{PUSCH}-1} M_{sc,actual}^{UCI}(l) \right\}$$

where

### 6.3.2.4 Rate matching

6.3.2.4.1 UCI encoded by Polar code

6.3.2.4.1.1 HARQ-ACK

- $M_{sc,nominal}^{UCI}(l)$ is the number of resource elements that can be used for transmission of UCI in OFDM symbol $l$, for $0, 1, 2, \cdots, N_{symb,nominal}^{PUSCH} - 1$, in the PUSCH transmission assuming a nominal repetition without segmentation, and $N_{symb,nominal}^{PUSCH}$ is the total number of OFDM symbols in a nominal repetition of the PUSCH, including all OFDM symbols used for DMRS;

- for any OFDM symbol that carries DMRS of the PUSCH assuming a nominal repetition without segmentation, $M_{sc,nominal}^{UCI}(l) = 0$;

- for any OFDM symbol that does not carry DMRS of the PUSCH assuming a nominal repetition without segmentation, $M_{sc,nominal}^{UCI}(l) = M_{sc}^{PUSCH} - M_{sc,nominal}^{PT\text{-}RS}(l)$ where $M_{sc,nominal}^{PT\text{-}RS}(l)$ is the number of subcarriers in OFDM symbol $l$ that carries PTRS, in the PUSCH transmission assuming a nominal repetition without segmentation;

- $M_{sc,actual}^{UCI}(l)$ is the number of resource elements that can be used for transmission of UCI in OFDM symbol $l$, for $l = 0, 1, 2, \cdots, N_{symb,actual}^{PUSCH} - 1$, in the actual repetition of the PUSCH transmission, and $N_{symb,actual}^{PUSCH}$ is the total number of OFDM symbols in the actual repetition of the PUSCH transmission, including all OFDM symbols used for DMRS;

- for any OFDM symbol that carries DMRS of the actual repetition of the PUSCH transmission, $M_{sc,actual}^{UCI}(l) = 0$;

- for any OFDM symbol that does not carry DMRS of the actual repetition of the PUSCH transmission, $M_{sc,actual}^{UCI}(l) = M_{sc}^{PUSCH} - M_{sc,actual}^{PT\text{-}RS}(l)$ where $M_{sc,actual}^{PT\text{-}RS}(l)$ is the number of subcarriers in OFDM symbol $l$ that carries PTRS, in the actual repetition of the PUSCH transmission;

- and all the other notations in the formula are defined the same as for PUSCH not using repetition type B.

**6.3.2.4 Rate matching**

6.3.2.4.1 UCI encoded by Polar code

6.3.2.4.1.1 HARQ-ACK

For HARQ-ACK transmission on PUSCH without UL-SCH, the number of coded modulation symbols per layer for HARQ-ACK transmission, denoted as $Q'_{ACK}$, is determined as follows:

$$Q'_{ACK} = \min\left\{ \left\lceil \frac{\left(O_{ACK} + L_{ACK}\right) \cdot \beta_{offset}^{PUSCH}}{R \cdot Q_m} \right\rceil, \left\lceil \alpha \cdot \sum_{l=l_0}^{N_{symb,all}^{PUSCH}-1} M_{sc}^{UCI}(l) \right\rceil \right\}$$

where

- $O_{ACK}$ is the number of HARQ-ACK bits,
- if $O_{ACK} \geq 360$, $L_{ACK} = 11$; otherwise $L_{ACK}$ is the number of CRC bits for HARQ-ACK defined according to Clause 6.3.1.2.1;;

$$\beta_{offset}^{PUSCH} = \beta_{offset}^{HARQ-ACK} \quad ;$$

- $M_{sc}^{PUSCH}$ is the scheduled bandwidth of the PUSCH transmission, expressed as a number of s ubcarriers;

- $M_{sc}^{PT\text{-}RS}(l)$ is the number of subcarriers in OFDM symbol $l$ that carries PTRS, in the PUSC H transmission;
- is the number of resource elements that can be used for transmission of UCI in OFDM symbol $l$, for , in the PUSCH transmission and is t he total number of OFDM symbols of the PUSCH, including all OFDM symbols used for DMRS;
- for any OFDM symbol that carries DMRS of the PUSCH, ;
- for any OFDM symbol that does not carry DMRS of the PUSCH,

$$M_{sc}^{UCI}(l) = M_{sc}^{PUSCH} - M_{sc}^{PT\text{-}RS}(l) ;$$

- $l_0$ is the symbol index of the first OFDM symbol that does not carry DMRS of the PUSCH, aft er the first DMRS symbol(s), in the PUSCH transmission;
- $R$ is the code rate of the PUSCH, determined according to Clause 6.1.4.1 of [6, TS38.214];

EP 4 280 499 A1

**6.3.2.4 Rate matching**

6.3.2.4.1 UCI encoded by Polar code

6.3.2.4.1.1 HARQ-ACK

- $Q_m$ is the modulation order of the PUSCH;
- $a$ is configured by higher layer parameter *scaling*.

In Table 6, a beta offset '$\beta_{offset}^{PUSCH}$' is a weight for rate matching of UCI on a PUSCH and is related to the amount of resources to be used for an HARQ-ACK and a CSI report when the PUSCH is transmitted. A $\beta_{offset}$ set s may be configured through higher-layer signaling. A specific $\beta_{offset}$ set may be used semi-statically, or a $\beta_{offset}$ set may be dynamically indicated by DCI (e.g., UL grant DCI format 0_1/0_2). In the dynamic $\beta_{offset}$ indication method, a beta offset indication field of DCI includes 2 bits indicating one of four $\beta_{offset}$ sets configured for the UE. Each $\beta_{offset}$ set includes three $\beta_{offset}$ values applicable to an HARQ-ACK, two $\beta_{offset}$ values for CSI part 1, and two $\beta_{offset}$ values for CSI part 2, and a specific $\beta_{offset}$ value is selected according to the size of corresponding payload. For example, a first $\beta_{offset}^{HARQ-ACK}$ value may be used to transmit M HARQ-ACKs on the PUSCH, and a second $\beta_{offset}^{HARQ-ACK}$ value may be used for transmitting N HARQ-ACKs on the PUSCH.

[Table 7]

## 9.1.2 Type-1 HARQ-ACK codebook determination

This clause applies if the UE is configured with *pdsch-HARQ-ACK-Codebook* = *semi-static*.

A UE reports HARQ-ACK information for a corresponding PDSCH reception or SPS PDSCH release only in a HARQ-ACK codebook that the UE transmits in a slot indicated by a value of a PDSCH-to-HARQ_feedback timing indicator field in a corresponding DCI format 1_0 or DCI format 1_1. The UE reports NACK value(s) for HARQ-ACK information bit(s) in a HARQ-ACK codebook that the UE transmits in a slot not indicated by a value of a PDSCH-to-HARQ_feedback timing indicator field in a corresponding DCI format 1_0 or DCI format 1_1.

If a UE is not provided *pdsch-HARQ-ACK-OneShotFeedback-r16*, the UE does not expect to receive a PDSCH scheduled by a DCI format that the UE detects in any PDCCH monitoring occasion and includes a PDSCH-to-HARQ_feedback timing indicator field providing an inapplicable value from *dl-DataToUL-ACK*. If the UE is provided *pdsch-AggregationFactor* in *SPS-Config* or *PDSCH-Config* and no entry in *pdsch-TimeDomainAllocationList* includes *RepNumR16* in *PDSCH-TimeDomainResourceAllocation*,

$N_{PDSCH}^{repeat,max}$ is a maximum value of *pdsch-AggregationFactor* in *SPS-Config* or *PDSCH-Config*; otherwise

$N_{PDSCH}^{repea,maxt} = 1$. The UE reports HARQ-ACK information for a PDSCH reception

- from slot $n - N_{PDSCH}^{repeat} + 1$ to slot $n$, if $N_{PDSCH}^{repeat}$ is provided by *pdsch-AggregationFactor* [6, TS 38.214], or

- from slot $n - RepNumR16 + 1$ to slot $n$, if the Time domain resource assignment field in the DCI format scheduling the PDSCH reception indicates an entry in *pdsch-TimeDomainAllocationList* containing *RepNumR16*, or

- in slot $n$, otherwise

only in a HARQ-ACK codebook that the UE includes in a PUCCH or PUSCH transmission in slot $n + k$, where $k$ is a number of slots indicated by the PDSCH-to-HARQ_feedback timing indicator field in a corresponding DCI format or provided by *dl-DataToUL-ACK* if the PDSCH-to-HARQ_feedback timing indicator field is not present in the DCI format. If the UE reports HARQ-ACK information for the PDSCH reception in a slot other than slot $n + k$, the UE sets a value for each corresponding HARQ-ACK information bit to NACK.

If a UE reports HARQ-ACK information in a PUCCH only for

- a SPS PDSCH release indicated by DCI format 1_0 with counter DAI field value of 1, or
- a PDSCH reception scheduled by DCI format 1_0 with counter DAI field value of 1 on the PCell, or
- SPS PDSCH reception(s)

within the $M_{A,c}$ occasions for candidate PDSCH receptions as determined in Clause 9.1.2.1, the UE determines a HARQ-ACK codebook only for the SPS PDSCH release or only for the PDSCH reception or only for one SPS PDSCH reception according to corresponding $M_{A,c}$ occasion(s) on respective serving cell(s), where the value of counter DAI in DCI format 1_0 is according to Table 9.1.3-1 and HARQ-ACK information bits in response to more than one SPS PDSCH receptions that the UE is configured to receive are ordered according to the following pseudo-code; otherwise, the procedures in Clause 9.1.2.1 and Clause 9.1.2.2 for a HARQ-ACK codebook determination apply.

Set $N_{cells}^{DL}$ to the number of serving cells configured to the UE

Set $N_c^{SPS}$ to the number of SPS PDSCH configuration configured to the UE for serving cell $c$

Set $N_c^{DL}$ to the number of DL slots for SPS PDSCH reception on serving cell $c$ with HARQ-ACK information multiplexed on the PUCCH

Set $j = 0$ – HARQ-ACK information bit index

Set $c = 0$ – serving cell index: lower indexes correspond to lower RRC indexes of corresponding cell

    while $c < N_{cells}^{DL}$

      Set $s = 0$ – SPS PDSCH configuration index: lower indexes correspond to lower RRC indexes of corresponding SPS configurations

        while $s < N_c^{SPS}$

```
Set n_D = 0  – slot index
while n_D < N_c^{DL}
    if {
        a UE is configured to receive a SPS PDSCH in slot n_D for SPS PDSCH configuration s
        on serving cell c, excluding SPS PDSCH that is not required to be received among
        overlapping SPS PDSCHs, if any according to [6, TS 38.214], or based on a UE capability
        for a number of PDSCH receptions in a slot according to [6, TS 38.214], or due to
        overlapping with a set of symbols indicated as uplink by tdd-UL-DL-
        ConfigurationCommon or by tdd-UL-DL-ConfigurationDedicated, and
        HARQ-ACK information for the SPS PDSCH is associated with the PUCCH
        }
        õ_j^{ACK} = HARQ-ACK information bit for this SPS PDSCH reception
        j = j + 1;
    end if
    n_D = n_D + 1;
end while
s = s + 1;
end while
c = c + 1;
end while
```

## 9.1.2.1    Type-1 HARQ-ACK codebook in physical uplink control channel

For a serving cell $c$, an active DL BWP, and an active UL BWP, as described in Clause 12, the UE determines a set of $M_{A,c}$ occasions for candidate PDSCH receptions for which the UE can transmit corresponding HARQ-ACK information in a PUCCH in slot $n_U$. If serving cell $c$ is deactivated, the UE uses as the active DL BWP for determining the set of $M_{A,c}$ occasions for candidate PDSCH receptions a DL BWP provided by *firstActiveDownlinkBWP-Id*. The determination is based:

    a) on a set of slot timing values $K_1$ associated with the active UL BWP

        a)    If the UE is configured to monitor PDCCH for DCI format 1_0 and is not configured to monitor PDCCH for either DCI format 1_1 or DCI format 1_2 on serving cell $c$, $K_1$ is provided by the slot timing values {1, 2, 3, 4, 5, 6, 7, 8}

        b)    If the UE is configured to monitor PDCCH for DCI format 1_1 and is not configured to monitor PDCCH for DCI format 1_2 for serving cell $c$, $K_1$ is provided by *dl-DataToUL-ACK*

        c)    If the UE is configured to monitor PDCCH for DCI format 1_2 and is not configured to monitor PDCCH for DCI format 1_1 for serving cell $c$, $K_1$ is provided by *dl-DataToUL-ACK-ForDCIFormat1_2*

        d)    If the UE is configured to monitor PDCCH for DCI format 1_1 and DCI format 1_2 for serving cell $c$, $K_1$ is provided by the union of *dl-DataToUL-ACK* and *dl-DataToUL-ACK-ForDCIFormat1_2*

    b) on a set of row indexes $R$ of a table that is associated with the active DL BWP and defining respective sets of slot offsets $K_0$, start and length indicators *SLIV*, and PDSCH mapping types for PDSCH reception as described in [6, TS 38.214], where the row indexes $R$ of the table are provided by the union of row indexes of time domain resource allocation tables for DCI formats the UE is configured to monitor PDCCH for serving cell $c$

        a)    if the UE is provided *ReferenceofSLIV-ForDCIFormat1_2*, for each row index with slot offset $K_0 = 0$ and PDSCH mapping Type B in a set of row indexes of a table for DCI format 1_2 [6, TS 38.214], for each PDCCH monitoring occasion in a set of PDCCH monitoring occasions with different starting symbols within a slot where the UE monitors PDCCH for DCI format 1_2 and with starting symbol $S_0 > 0$, if $S + S_0 + L \le 14$ for normal cyclic prefix and $S + S_0 + L \le 12$ for extended cyclic prefix, add a new row index in the set of row indexes of the table by

replacing the starting symbol $S$ of the row index by $S + S_0$

c) on the ratio $2^{\mu_{DL}-\mu_{UL}}$ between the downlink SCS configuration $\mu_{DL}$ and the uplink SCS configuration $\mu_{UL}$ provided by *subcarrierSpacing* in *BWP-Downlink* and *BWP-Uplink* for the active DL BWP and the active UL BWP, respectively

d) if provided, on *tdd-UL-DL-ConfigurationCommon* and *tdd-UL-DL-ConfigurationDedicated* as described in Clause 11.1

e) if *ca-SlotOffset* is provided, on $N^{DL}_{slot,offset,c}$ and $\mu_{offset,DL,c}$ provided by *ca-SlotOffset* for serving cell $c$, or on $N^{UL}_{slot,offset}$ and $\mu_{offset,UL}$ provided by *ca-SlotOffset* for the primary cell, as described in [4, TS 38.211].

If a UE

- is not provided *CORESETPoolIndex* or is provided *CORESETPoolIndex* with a value of 0 for first CORESETs on active DL BWPs of serving cells, and
- is provided *CORESETPoolIndex* with a value of 1 for second CORESETs on active DL BWPs of the serving cells, and
- is provided *ACKNACKFeedbackMode = JointFeedback*

where

- a serving cell is placed in a first set $S_0$ of $N^{DL,0}_{cells}$ serving cells if the serving cell includes a first CORESET, and
- a serving cell is placed in a second set $S_1$ of $N^{DL,1}_{cells}$ serving cells if the serving cell includes a second CORESET, and
- serving cells are placed in a set according to an ascending order of a serving cell index

the UE generates a Type-1 HARQ-ACK codebook for the set $S_0$ and the set $S_1$ of serving cells separately by setting $N^{DL}_{cells} = N^{DL,0}_{cells}$ and $N^{DL}_{cells} = N^{DL,1}_{cells}$ in the following pseudo-code. The UE concatenates the HARQ-ACK codebook generated for the set $S_0$ followed by the HARQ-ACK codebook generated for the set $S_1$ to obtain a total number of $O_{ACK}$ HARQ-ACK information bits.

For the set of slot timing values $K_1$, the UE determines a set of $M_{A,c}$ occasions for candidate PDSCH receptions or SPS PDSCH releases according to the following pseudo-code. A location in the Type-1 HARQ-ACK codebook for HARQ-ACK information corresponding to a single SPS PDSCH release is same as for a corresponding SPS PDSCH reception. A location in the Type-1 HARQ-ACK codebook for HARQ-ACK information corresponding to multiple SPS PDSCH releases by a single DCI format is same as for a corresponding SPS PDSCH reception with the lowest SPS configuration index among the multiple SPS PDSCH releases.

Set $j = 0$ - index of occasion for candidate PDSCH reception or SPS PDSCH release

Set $B = \varnothing$

Set $M_{A,c} = \varnothing$

Set $\mathcal{C}(K_1)$ to the cardinality of set $K_1$

Set $k = 0$ – index of slot timing values $K_{1,k}$, in descending order of the slot timing values, in set $K_1$ for serving cell $c$

If a UE is not provided *ca-SlotOffset* for any serving cell of PDSCH receptions and for the serving cell of corresponding PUCCH transmission with HARQ-ACK information

while $k < \mathcal{C}(K_1)$

$$\text{if } \mathrm{mod}\left(n_U - K_{1,k} + 1, \max\left(2^{\mu_{UL}-\mu_{DL}}, 1\right)\right) = 0$$

Set $n_D = 0$ – index of a DL slot within an UL slot

while $n_D < \max\left(2^{\mu_{DL}-\mu_{UL}}, 1\right)$

Set $R$ to the set of rows

Set $\mathcal{C}(R)$ to the cardinality of $R$

Set $r = 0$ – index of row in set $R$

if slot $n_U$ starts at a same time as or after a slot for an active DL BWP change on serving cell $c$ or an active UL BWP change on the PCell and slot $\left\lfloor \left(n_U - K_{1,k}\right) \cdot 2^{\mu_{DL}-\mu_{UL}} \right\rfloor + n_D$ is before the slot for the active DL BWP change on serving cell $c$ or the active UL BWP change on the PCell

$n_D = n_D + 1$;

else

while $r < \mathcal{C}(R)$

if the UE is provided *tdd-UL-DL-ConfigurationCommon*, or *tdd-UL-DL-ConfigurationDedicated* and, for each slot from slot $\left\lfloor \left(n_U - K_{1,k}\right) \cdot 2^{\mu_{DL}-\mu_{UL}} \right\rfloor + n_D - N_{PDSCH}^{repeat,max} + 1$ to slot $\left\lfloor \left(n_U - K_{1,k}\right) \cdot 2^{\mu_{DL}-\mu_{UL}} \right\rfloor + n_D$, at least one symbol of the PDSCH time resource derived by row $r$ is configured as UL where $K_{1,k}$ is the $k$-th slot timing value in set $K_1$,

$R = R \setminus r$;

else

$r = r + 1$;

end if

end while

if the UE does not indicate a capability to receive more than one unicast PDSCH per slot and $R \neq \varnothing$,

$$M_{A,c} = M_{A,c} \bigcup j$$;

$j = j + 1$;

else

Set $\mathcal{C}(R)$ to the cardinality of $R$

Set $m$ to the smallest last OFDM symbol index, as determined by the *SLIV*, among all rows of $R$

while $R \neq \varnothing$

Set $r = 0$

while $r < \mathcal{C}(R)$

if $S \leq m$ for start OFDM symbol index $S$ for row $r$

$b_{r,k,n_D} = j$ ; - index of occasion for candidate PDSCH reception or SPS PDSCH release associated with row $r$

$R = R \setminus r$;

$$B = B \bigcup b_{r,k,n_D} \; ;$$

   else

    $r = r + 1;$

   end if

   end while

$$M_{A,c} = M_{A,c} \bigcup j;$$

  $j = j + 1;$

    Set $m$ to the smallest last OFDM symbol index among all rows of $R$ ;

   end while

  end if

  $n_D = n_D + 1;$

  end if

  end while

 end if

 $k = k + 1;$

end while

else

while $\quad k < \mathcal{C}(K_1)$

 if $\quad \mathrm{mod}\left(n_U - K_{1,k} + \left\lfloor (\dfrac{N_{slot,offset}^{UL}}{2^{\mu_{offset,UL}}} - \dfrac{N_{slot,offset,c}^{DL}}{2^{\mu_{offset,DL,c}}}) \cdot 2^{\mu_{UL}} \right\rfloor + \right.$

$$\left. 1, \max(2^{\mu_{UL}-\mu_{DL}}, 1)\right) = 0$$

  Set $\quad n_D = 0 \quad$ – index of a DL slot within an UL slot

  while $\quad n_D < \max\left(2^{\mu_{DL}-\mu_{UL}}, 1\right)$

   Set $R$ to the set of rows

   Set $\mathcal{C}(R)$ to the cardinality of $R$

   Set $r = 0$ – index of row in set $R$

  if slot $n_U$ starts at a same time as or after a slot for an active DL BWP change on serving cell $c$ or an active UL BWP change on the PCell and slot $\left\lfloor (n_U - K_{1,k}) \cdot 2^{\mu_{DL}-\mu_{UL}} \right\rfloor +$

$$\left\lfloor \left(\dfrac{N_{slot,offset}^{UL}}{2^{\mu_{offset,UL}}} - \dfrac{N_{slot,offset,c}^{DL}}{2^{\mu_{offset,DL,c}}}\right) \cdot 2^{\mu_{DL}} \right\rfloor + n_D$$

  is before the slot for the active DL BWP change on serving cell $c$ or the active UL BWP change on the PCell

  $n_D = n_D + 1;$

  else

   while $\quad r < \mathcal{C}(R)$

    if the UE is provided *tdd-UL-DL-ConfigurationCommon*, or *tdd-UL-DL-ConfigurationDedicated* and, for each slot from slot $\left\lfloor (n_U - K_{1,k}) \cdot 2^{\mu_{DL}-\mu_{UL}} \right\rfloor +$

$$\left\lfloor\left(\frac{N^{UL}_{slot,offset}}{2^{\mu_{offset,UL}}}-\frac{N^{DL}_{slot,offset,c}}{2^{\mu_{offset,DL,c}}}\right)\cdot 2^{\mu_{DL}}\right\rfloor+n_D-N^{repeat,max}_{PDSCH}+1 \text{ to}$$

slot $\left\lfloor\left(n_U-K_{1,k}\right)\cdot 2^{\mu_{DL}-\mu_{UL}}\right\rfloor+\left\lfloor\left(\frac{N^{UL}_{slot,offset}}{2^{\mu_{offset,UL}}}-\frac{N^{DL}_{slot,offset,c}}{2^{\mu_{offset,DL,c}}}\right)\cdot\right.$

$\left.2^{\mu_{DL}}\right\rfloor+n_D$, at least one symbol of the PDSCH time resource derived by row $r$ is

configured as UL where $K_{1,k}$ is the $k$-th slot timing value in set $K_1$ ,

    $R=R\backslash r$ ;
   else
    $r=r+1$ ;
   end if
 end while
if the UE does not indicate a capability to receive more than one unicast PDSCH per slot and
   $R\neq\varnothing$ ,

$$M_{A,c}=M_{A,c}\bigcup j$$ ;

   $j=j+1$ ;
else
   Set $\mathscr{C}(R)$ to the cardinality of $R$
   Set $m$ to the smallest last OFDM symbol index, as determined by the *SLIV*, among all rows
    of $R$
   while $R\neq\varnothing$
    Set $r=0$
    while $r<\mathscr{C}(R)$
      if $S\leq m$ for start OFDM symbol index $S$ for row $r$

$$b_{r,k,n_D}=j$$ ; - index of occasion for candidate PDSCH reception or SPS
          PDSCH release associated with row $r$
       $R=R\backslash r$ ;

$$B=B\bigcup b_{r,k,n_D}$$ ;

      else
       $r=r+1$ ;
      end if
    end while

$$M_{A,c}=M_{A,c}\bigcup j;$$

    $j=j+1$ ;
    Set $m$ to the smallest last OFDM symbol index among all rows of $R$ ;
   end while
 end if

$$n_D=n_D+1;$$

 end if
 end while
end if
$k=k+1$ ;

end while

end if

If the UE indicates a capability to receive more than one PDSCH per slot, for occasions of candidate PDSCH receptions corresponding to rows of $R$ associated with a same value of $b_{r,k,n_D}$ , where

$b_{r,k,n_D} \in B$ , the UE does not expect to receive more than one PDSCH in a same DL slot.

If a UE receives a SPS PDSCH, or a SPS PDSCH release, or a PDSCH that is scheduled by a DCI format 1_0 and if

- the UE is configured with one serving cell, and
- $\mathcal{C}(M_{A,c}) = 1$ , and
- *PDSCH-CodeBlockGroupTransmission* is provided to the UE

the UE generates HARQ-ACK information only for the transport block in the PDSCH or only for the SPS PDSCH release.

If a UE receives a SPS PDSCH, or a SPS PDSCH release, or a PDSCH that is scheduled by a DCI format 1_0 and if

- the UE is configured with more than one serving cells, or
- $\mathcal{C}(M_{A,c}) > 1$ , and
- *PDSCH-CodeBlockGroupTransmission* is provided to the UE

the UE repeats $N_{HARQ-ACK}^{CBG/TB,max}$ times the HARQ-ACK information for the transport block in the PDSCH or for the SPS PDSCH release.

A UE does not expect to detect a DCI format switching a DL BWP within $N_3$ symbols prior to a first symbol of a PUCCH transmission where the UE multiplexes HARQ-ACK information, where $N_3$ is defined in Clause 9.2.3.

If a UE is provided *dl-DataToUL-ACK* or *dl-DataToUL-ACK-ForDCIFormat1_2*, the UE does not expect to be indicated by DCI format 1_0 a slot timing value for transmission of HARQ-ACK information that does not belong to the intersection of the set of slot timing values {1, 2, 3, 4, 5, 6, 7, 8} and the set of slot timing values provided by $K_1$ for the active DL BWP of a corresponding serving cell.

If an occasion for a candidate PDSCH reception can be in response to a PDCCH with DCI format 1_1 and if *maxNrofCodeWordsScheduledByDCI* indicates reception of two transport blocks, when the UE receives a PDSCH with one transport block, the HARQ-ACK information is associated with the first transport block and the UE generates a NACK for the second transport block if *harq-ACK-SpatialBundlingPUCCH* is not provided and generates HARQ-ACK information with value of ACK for the second transport block if *harq-ACK-SpatialBundlingPUCCH* is provided.

A UE determines $\tilde{o}_0^{ACK}, \tilde{o}_1^{ACK}, ..., \tilde{o}_{O^{ACK}-1}^{ACK}$ HARQ-ACK information bits, for a total number of $O_{ACK}$ HARQ-ACK information bits, of a HARQ-ACK codebook for transmission in a PUCCH according to the following pseudo-code. In the following pseudo-code, if the UE does not receive a transport block or a CBG, due to the UE not detecting a corresponding DCI format 1_0 or DCI format 1_1, the UE generates a NACK value for the transport block or the CBG. The cardinality of the set $M_{A,c}$ defines a total number $M_c$ of occasions for PDSCH reception or SPS PDSCH release for serving cell $c$ corresponding to the HARQ-ACK information bits.

Set $c = 0$ – serving cell index: lower indexes correspond to lower RRC indexes of corresponding cells including, when applicable, cells in the set $S_0$ and the set $S_1$

Set $j = 0$ - HARQ-ACK information bit index

Set $N_{cells}^{DL}$ to the number of serving cells configured by higher layers for the UE

while $c < N_{cells}^{DL}$

    Set $m = 0$ – index of occasion for candidate PDSCH reception or SPS PDSCH release

    while $m < M_c$

        if *harq-ACK-SpatialBundlingPUCCH* is not provided, *PDSCH-CodeBlockGroupTransmission* is not provided, and the UE is configured by *maxNrofCodeWordsScheduledByDCI* with reception of two transport blocks for the active DL BWP of serving cell $c$,

        $\tilde{o}_j^{ACK}$ = HARQ-ACK information bit corresponding to a first transport block of this cell;

        $j = j + 1$;

        $\tilde{o}_j^{ACK}$ = HARQ-ACK information bit corresponding to a second transport block of this cell;

        $j = j + 1$;

        elseif *harq-ACK-SpatialBundlingPUCCH* is provided, and the UE is configured by *maxNrofCodeWordsScheduledByDCI* with reception of two transport blocks for the active DL BWP of serving cell $c$,

        $\tilde{o}_j^{ACK}$ = binary AND operation of the HARQ-ACK information bits corresponding to first and second transport blocks of this cell - if the UE receives one transport block, the UE assumes ACK for the second transport block;

        $j = j + 1$;

        elseif *PDSCH-CodeBlockGroupTransmission* is provided, and $N_{HARQ\text{-}ACK,c}^{CBG/TB,max}$ CBGs are indicated by *maxCodeBlockGroupsPerTransportBlock* for serving cell $c$,

        Set $n_{CBG} = 0$ - CBG index

        while $n_{CBG} < N_{HARQ\text{-}ACK,c}^{CBG/TB,max}$

            $\tilde{o}_{j+n_{CBG}}^{ACK}$ = HARQ-ACK information bit corresponding to CBG $n_{CBG}$ of the first transport block;

            if the UE is configured by *maxNrofCodeWordsScheduledByDCI* with reception of two transport blocks for the active DL BWP of serving cell $c$

            $\tilde{o}_{j+n_{CBG}+N_{HARQ-ACK,c}^{CBG/TB,max}}^{ACK}$ = HARQ-ACK information bit corresponding to CBG $n_{CBG}$ of the second transport block;

            end if

            $n_{CBG} = n_{CBG} + 1$;

        end while

$$j = j + N_{TB,c}^{DL} \cdot N_{HARQ\text{-}ACK,c}^{CBG/TB,max} \text{, where } N_{TB,c}^{DL} \text{ is the value of}$$

*maxNrofCodeWordsScheduledByDCI* for the active DL BWP of serving cell $c$;

else

$$\tilde{o}_j^{ACK} = \text{HARQ-ACK information bit of serving cell } c;$$

$j = j + 1;$

end if

$m = m + 1;$

end while

$c = c + 1;$

end while

If $O_{ACK} + O_{SR} + O_{CSI} \leq 11$, the UE determines a number of HARQ-ACK information bits

$n_{HARQ\text{-}ACK}$ for obtaining a transmission power for a PUCCH, as described in Clause 7.2.1, as

$$n_{HARQ\text{-}ACK} = \sum_{c=0}^{N_{cells}^{DL}-1} \sum_{m=0}^{M_c-1} N_{m,c}^{received} + \sum_{c=0}^{N_{cells}^{DL}-1} \sum_{m=0}^{M_c-1} N_{m,c}^{received,CBG} \quad \text{where}$$

- $N_{m,c}^{received}$ is the number of transport blocks the UE receives in PDSCH reception occasion $m$ for serving cell $c$ if *harq-ACK-SpatialBundlingPUCCH* and *PDSCH-CodeBlockGroupTransmission* are not provided, or the number of transport blocks the UE receives in PDSCH reception occasion $m$ for serving cell $c$ if *PDSCH-CodeBlockGroupTransmission* is provided and the PDSCH reception is scheduled by a DCI format 1_0, or the number of PDSCH receptions if *harq-ACK-SpatialBundlingPUCCH* is provided or SPS PDSCH release in PDSCH reception occasion $m$ for serving cell $c$ and the UE reports corresponding HARQ-ACK information in the PUCCH.

- $N_{m,c}^{received,CBG}$ is the number of CBGs the UE receives in a PDSCH reception occasion $m$ for serving cell $c$ if *PDSCH-CodeBlockGroupTransmission* is provided and the PDSCH reception is scheduled by a DCI format 1_1 and the UE reports corresponding HARQ-ACK information in the PUCCH.

### 9.1.2.2 Type-1 HARQ-ACK codebook in physical uplink shared channel

If a UE would multiplex HARQ-ACK information in a PUSCH transmission that is not scheduled by a DCI format or is scheduled by DCI format 0_0, then

- if the UE has not received any PDSCH or SPS PDSCH release that the UE transmits corresponding HARQ-ACK information in the PUSCH, based on a value of a respective PDSCH-to-HARQ_feedback timing indicator field in a DCI format scheduling the PDSCH reception or the SPS PDSCH release or on the value of *dl-DataToUL-ACK* if the PDSCH-to-HARQ_feedback timing indicator field is not present in the DCI format, in any of the $M_c$ occasions for candidate PDSCH receptions by DCI format 1_0 or DCI format 1_1 or SPS PDSCH on any serving cell $c$, as described in Clause 9.1.2.1, the UE does not multiplex HARQ-ACK information in the PUSCH transmission;

- else the UE generates the HARQ-ACK codebook as described in Clause 9.1.2.1, except that *harq-ACK-SpatialBundlingPUCCH* is replaced by *harq-ACK-SpatialBundlingPUSCH*, unless the UE receives only a SPS PDSCH release, or only SPS PDSCH reception, or only a PDSCH that is scheduled by DCI

format 1_0 with a counter DAI field value of 1 on the PCell in the $M_c$ occasions for candidate PDSCH receptions in which case the UE generates HARQ-ACK information only for the SPS PDSCH release or only for the PDSCH reception as described in Clause 9.1.2.

A UE sets to NACK value in the HARQ-ACK codebook any HARQ-ACK information corresponding to PDSCH reception or SPS PDSCH release that the UE detects in a PDCCH monitoring occasion that starts after a PDCCH monitoring occasion where the UE detects a DCI format 0_0 or a DCI format 0_1 scheduling the PUSCH transmission.

A UE does not expect to detect a DCI format switching a DL BWP within $N_2$ symbols prior to a first symbol of a PUSCH transmission where the UE multiplexes HARQ-ACK information, where $N_2$ is defined in [6, TS 38.214].

If a UE multiplexes HARQ-ACK information in a PUSCH transmission that is scheduled by DCI format 0_1, the UE generates the HARQ-ACK codebook as described in Clause 9.1.2.1 when a value of the DAI field in DCI format 0_1 is $V_{T-DAI}^{UL} = 1$ except that *harq-ACK-SpatialBundlingPUCCH* is replaced by *harq-ACK-SpatialBundlingPUSCH*. The UE does not generate a HARQ-ACK codebook for multiplexing in the PUSCH transmission when $V_{T-DAI}^{UL} = 0$ unless the UE receives only a SPS PDSCH release, or only SPS PDSCH(s), or only a PDSCH that is scheduled by DCI format 1_0 with a counter DAI field value of 1 on the PCell in the $M_c$ occasions for candidate PDSCH receptions in which case the UE generates HARQ-ACK information only for the SPS PDSCH release or only for the PDSCH reception as described in Clause 9.1.2. $V_{T-DAI}^{UL} = 0$ if the DAI field in DCI format 0_1 is set to '0'; otherwise, $V_{T-DAI}^{UL} = 1$.

### 9.1.4 Type-3 HARQ-ACK codebook determination

If a UE is provided *pdsch-HARQ-ACK-OneShotFeedback-r16*, the UE determines a Type-3 HARQ-ACK codebook according to the following procedure.

Set $N_{cells}^{DL}$ to the number of configured serving cells

Set $N_{HARQ,c}^{DL}$ to the value of *nrofHARQ-ProcessesForPDSCH* for serving cell $c$, if provided; else, set $N_{HARQ,c}^{DL} = 8$

Set $N_{TB,c}^{DL}$ to the value of *maxNrofCodeWordsScheduledByDCI* for serving cell $c$ if *harq-ACK-SpatialBundlingPUCCH* is provided and $NDI_{HARQ} = 0$, or if *harq-ACK-SpatialBundlingPUCCH* is not provided, or if *maxCodeBlockGroupsPerTransportBlock* is provided for serving cell $c$; else, set $N_{TB,c}^{DL} = 1$

Set $N_{HARQ-ACK,c}^{CBG/TB,max}$ to the number of HARQ-ACK information bits per TB for PDSCH receptions on serving cell $c$ as described in Clause 9.1.1 if *maxCodeBlockGroupsPerTransportBlock* is provided for serving cell $c$ and *pdsch-HARQ-ACK-OneShotFeedbackCBG-r16* is provided; else, set $N_{HARQ-ACK,c}^{CBG/TB,max} = 0$

Set $NDI_{HARQ} = 0$ if *pdsch-HARQ-ACK-OneShotFeedbackNDI-r16* is provided; else set $NDI_{HARQ} = 1$

Set $c = 0$ – serving cell index
Set $h = 0$ – HARQ process number
Set $t = 0$ – TB index
Set $g = 0$ – CBG index
Set $j = 0$

while $c < N_{\text{cells}}^{\text{DL}}$

while $h < N_{\text{HARQ},c}^{\text{DL}}$

if $NDI_{\text{HARQ}} = 0$

if $N_{\text{HARQ-ACK},c}^{\text{CBG/TB,max}} > 0$

while $t < N_{\text{TB},c}^{\text{DL}}$

while $g < N_{\text{HARQ-ACK},c}^{\text{CBG/TB,max}}$

$\tilde{o}_j^{ACK}$ = HARQ-ACK information bit for CBG $g$ of TB $t$ for HARQ process number $h$ of serving cell $c$

$j = j + 1$

$g = g + 1$

end while

$\tilde{o}_j^{ACK}$ = NDI value indicated in the DCI format corresponding to the HARQ-ACK information bit(s) for TB $t$ for HARQ process number $h$ on serving cell $c$, if any;

else, $\tilde{o}_j^{ACK} = 0$

$g = 0$

$j = j + 1$

$t = t + 1$

end while

else

while $t < N_{\text{TB},c}^{\text{DL}}$

$\tilde{o}_j^{ACK}$ = HARQ-ACK information bit for TB $t$ for HARQ process $h$ of serving cell $c$

$j = j + 1$

$\tilde{o}_j^{ACK}$ = NDI value indicated in the DCI format corresponding to the HARQ-ACK information bit(s) for TB $t$ for HARQ process number $h$ on serving cell $c$, if any;

else, $\tilde{o}_j^{ACK} = 0$

$j = j + 1$

$t = t + 1$

end while

end if

$t = 0$

else

if $N_{\text{HARQ-ACK},c}^{\text{CBG/TB,max}} > 0$

while $t < N_{\text{TB},c}^{\text{DL}}$

if UE has reported HARQ-ACK information for TB $t$ for HARQ process number $h$ on serving cell $c$, and has not subsequently detected a DCI format scheduling a PDSCH reception, or received a SPS PDSCH, with TB $t$ for HARQ process number $h$ on serving cell $c$

while $g < N_{\text{HARQ-ACK},c}^{\text{CBG/TB,max}}$

$$\widetilde{o}_j^{ACK} = \text{NACK}$$

$j = j + 1$
$g = g + 1$
end while
end if
if UE has obtained HARQ-ACK information for TB $t$ for HARQ process number $h$ on serving cell $c$ corresponding to a PDSCH reception and has not reported the HARQ-ACK information corresponding to the PDSCH reception

while $g < N_{\text{HARQ-ACK},c}^{\text{CBG/TB,max}}$

$\widetilde{o}_j^{ACK}$ = HARQ-ACK information bit for CBG $g$ of TB $t$ for HARQ process number $h$ of serving cell $c$
$j = j + 1$
$g = g + 1$
end while
end if
$g = 0$
$t = t + 1$
end while
else

while $t < N_{\text{TB},c}^{\text{DL}}$

if UE has reported HARQ-ACK information for TB $t$ for HARQ process number $h$ on serving cell $c$ and has not subsequently detected a DCI format scheduling a PDSCH reception, or received a SPS PDSCH, with TB $t$ for HARQ process number $h$ on serving cell $c$

$\widetilde{o}_j^{ACK}$ = NACK

$j = j + 1$
$t = t + 1$
end if
if UE has obtained HARQ-ACK information for TB $t$ for HARQ process number $h$ on serving cell $c$ corresponding to a PDSCH reception and has not reported the HARQ-ACK information corresponding to the PDSCH reception
if *harq-ACK-SpatialBundlingPUCCH* is not provided

$\widetilde{o}_j^{ACK}$ = HARQ-ACK information bit for TB $t$ for HARQ process $h$ of serving cell $c$
else

$\widetilde{o}_j^{ACK}$ = binary AND operation of the HARQ-ACK information bits corresponding to first and second transport blocks for HARQ process $h$ of serving cell $c$. If the UE receives one transport block, the UE assumes ACK for the second transport block
end if
$j = j + 1$
$t = t + 1$
end if
end while

```
            end if
            t = 0
            end if
            h = h + 1
        end while
        h = 0
        c = c + 1
    end while
```

If a UE receives a SPS PDSCH, or a PDSCH that is scheduled by a DCI format 1_0 for a serving cell $c$ and if *maxCodeBlockGroupsPerTransportBlock* is provided for serving cell $c$, and *pdsch-HARQ-ACK-OneShotFeedbackCBG-r16* is provided, the UE repeats $N_{HARQ-ACK,c}^{CBG/TB,max}$ times the HARQ-ACK information for the transport block in the PDSCH.

If a UE detects a DCI format that includes a One-shot HARQ-ACK request field with value 1, the UE determines a PUCCH or a PUSCH to multiplex a Type-3 HARQ-ACK codebook for transmission in a slot as described in Clauses 9.2.3 and 9.2.5. The UE multiplexes only the Type-3 HARQ-ACK codebook in the PUCCH or the PUSCH for transmission in the slot.

If
- a UE detects a DCI format that includes a One-shot HARQ-ACK request field with value 1, and
- the CRC of the DCI is scrambled by a C-RNTI or an MCS-C-RNTI, and
- *resourceAllocation = resourceAllocationType0* and all bits of the frequency domain resource assignment field in the DCI format are equal to 0, or
- *resourceAllocation = resourceAllocationType1* and all bits of the frequency domain resource assignment field in the DCI format are equal to 1, or
- *resourceAllocation = dynamicSwitch* and all bits of the frequency domain resource assignment field in the DCI format are equal to 0 or 1

the DCI format provides a request for a Type-3 HARQ-ACK codebook report and does not schedule a PDSCH reception. The UE is expected to provide HARQ-ACK information in response to the request for the Type-3 HARQ-ACK codebook after $N$ symbols from the last symbol of a PDCCH providing the DCI format, where the value of $N$ for $\mu = 0,1,2$ is provided in Clause 10.2 by replacing "SPS PDSCH release" with "DCI format".

If a UE multiplexes HARQ-ACK information in a PUSCH transmission, the UE generates the HARQ-ACK codebook as described in this Clause except that *harq-ACK-SpatialBundlingPUCCH* is replaced by *harq-ACK-SpatialBundlingPUSCH.*

The definitions of the terms used herein may be summarized as follows. FIG. 5 and/or 6 and details thereof may be referred to for a better understanding of the terms.

- K0 (DL assignment-to-PDSCH offset): K0 denotes a slot interval between a DCI transmission slot and a PDSCH transmission slot (scheduled by the corresponding DCI).
- SLIV (start and length indicator value): The SLIV corresponds to information on a PDSCH start symbol and a symbol duration (or end symbol) (i.e., PDSCH occasion).
- Mapping type: The mapping type corresponds to information on whether the position of a DMRS symbol on a PDSCH is determined based on the symbol index within a slot duration or the symbol index within a PDSCH duration.
- TDRA (time domain resource assignment) table: The TDRA table includes multiple combinations of {K0, SLIV, mapping type} (configured by RRC) (one combination is mapped to each row of the table). A specific row is indicated by DCI.
- K1 (PDSCH-to-HARQ_feedback timing indicator): K1 denotes a slot interval between a PDSCH transmission slot and a HARQ-ACK transmission slot (for reception of the corresponding PDSCH)

### HARQ-ACK codebook multiplexing for URLLC

To support a data transmission/service to which reliability/latency performance is important, such as URLLC, a service/protection priority (e.g., low priority (LP) or high priority (HP)) may be configured for the UE semi-statically (by RRC signaling) or dynamically (by DCI signaling or MAC signaling), for each physical channel/signal (transmission resource) (e.g., PUSCH) and control information (e.g., UCI).

Specifically, a priority indicator has been introduced to some DCI formats (e.g., DCI format 1_1/1_2 for DL, and DCI format 0_1/0_2 for UL) in NR Rel. 16. When the priority indicator is configured for a corresponding DCI format by higher-layer signaling, the UE blind-decodes the DCI format, assuming that the priority indicator exists. Without explicit signaling indicating that the priority indicator will be used for the DCI format, the UE blind-decodes the DCI format, assuming that the priority indicator is not included in the DCI format. When no priority information is provided for a corresponding DL/UL signal, the UE may assume LP (e.g., priority index=0) for the DL/UL signal. Those skilled in the art will understand that the priority indicator of DCI is one of various means for indicating/configuring a priority, not the only method.

In an example of the above-described prioritization, a lower priority index may be configured/indicated for LP, and a higher priority index may be configured/indicated for HP. Alternatively, a lower bit value (e.g., bit '0') may be configured/indicated for LP, and a higher bit value (e.g., bit '1') may be configured/indicated for HP.

For example, a priority (e.g., LP or HP) may be configured/indicated for each UCI type (e.g., HARQ-ACK, SR, and/or CSI) or for each PUCCH/PUSCH resource configured/indicated for each corresponding UCI transmission. For example, LP/HP may be indicated for an HARQ-ACK for a PDSCH by DL grant DCI that schedules the PDSCH. For example, in case of (aperiodic) CSI, LP/HP may be indicated by DCI (e.g., UL grant DCI scheduling a PUSCH). In another example, LP/HP may be configured/indicated as the priority (e.g., LP or HP) of a PUSCH by UL grant DCI scheduling the PUSCH.

In another example, (i) a PUCCH resource set may be configured independently for each priority, and/or (ii) a maximum coding rate for a PUCCH transmission may be configured independently for each priority. In another example, (iii) a beta offset $\beta_{offset}$ for encoding UCI on a PUSCH (e.g., for an HARQ-ACK or CSI part 1/2. See Table 6) may be configured independently for each priority and/or (iv) an HARQ-ACK codebook type may be configured independently for each priority. At least one or a combination of (i) to (iv) may be used.

In 3GPP NR systems, three HARQ-ACK codebook types: Type-1codebook type, Type-2 codebook type, and Type-3 codebook type are defined according to HARQ-ACK bit (payload) configuration methods. In the Type-1 codebook, the HARQ-ACK payload is configured according to combinations of candidate HARQ-ACK timing (K1) sets and candidate PDSCH occasion (SLIV) sets (which are configured for each cell). In the Type-3 codebook, the HARQ-ACK payload is configured by mapping a HARQ-ACK bit corresponding to each HARQ process number (HPN) for each HPN, depending on the maximum number of HARQ processes (configured for each cell) (see Table 7).

Hereinafter, the Type-1 codebook will be reviewed in detail. When a set of multiple (e.g., N) candidate K1 values is configured (for each cell), the UE may calculate all combinations of SLIVs that may be transmitted (or may be scheduled to be transmitted) in a DL slot before K1 slots from an A/N transmission slot for each K1 value and then configure an A/N sub-payload corresponding to the corresponding DL slot (including determination of the position/sequence of A/N bits corresponding to each SLIV capable of being transmitted in the corresponding slot) (this process is defined as "SLIV pruning"). Then, the full A/N codebook may be configured by concatenating these A/N sub-payloads for N K1 values. Next, a process of determining combinations of PDSCH occasions (SLIVs) capable of being transmitted based on the SLIV pruning will be described. The UE may be scheduled with one or more non-overlapping PDSCHs in each DL slot (e.g., index #N-candidate K1 value). In this case, the number of non-overlapping PDSCHs (i.e., the maximum number of non-overlapping PDSCHs scheduled in the slot) may be determined based on a combination of configured SLIVs (e.g., a combination of SLIVs configured by pdsch-TimeDomainAllocationList and indicated by a TDRA field of DCI). The SLIV pruning refers to a process in which based on the SLIVs configured to the UE, the UE performs pruning on overlapping potential PDSCHs (that is, the UE counts PDSCHs that are incompatible/exclusive due to overlapping as at most one PDSCH transmission) and determines (schedulable/compatible) (potential) non-overlapping PDSCHs. According to the current Type-1 codebook, A/N sub-payloads constructed by the SLIV pruning are concatenated for N K1 values to form the full A/N codebook (see Section 9.1.2 of 3GPP TS 38.213 V16.2.0). In this case, a set of (N) DL slots corresponding to each K1 value may be defined as a bundling window corresponding to the A/N transmission slot.

In the following, the Type-3 codebook will be described in detail. The BS may configure to the UE either Mode 1 in which both a HARQ-ACK and a new data indicator (NDI) related thereto are fed back or Mode 2 in which only a HARQ-ACK is fed back with no NDI. When Mode 1 is configured, the UE may be configured to feed back both a HARQ-ACK for PDSCH reception for each HPN and an NDI related thereto (indicated by DCI). On the other hand, when Mode 2 is configured, the UE may be configured to feed back only a HARQ-ACK for PDSCH reception for each HPN.

Accordingly, the present disclosure proposes methods of multiplexing and transmitting Type-1 codebook-based HARQ-ACK(s) configured/indicated with different priorities (e.g., LP or HP) and/or Type-3 codebook-based HARQ-ACK(s) configured/indicated with different priorities (e.g., LP or HP) on the same signal/channel (e.g., PUCCH/PUSCH).

Before the description of the methods, it is assumed whether priority indication (e.g., LP or HP) in DL DCI (e.g., DCI format 1_1 or 1_2) is performed may be configured differently for each cell (as shown in Table 8 below). It is also assumed that even for cells where priority indication in DCI is configured to be performed, only some of all HPNs (configured for the corresponding cell) may be scheduled with HP.

[Table 8]

| |
| --- |
| 1) For a cell where priority indication in DL DCI is configured not to be performed (for convenience, such a cell is defined as "Type A cell"), <br> A. No priority indicator field is configured for all DCI formats. <br> B. For Type A cell(s), a K1 set and a TDRA table are configured only for LP. <br> C. All HPNs configured for Type A cell(s) may be scheduled only with LP. <br><br> 2) For a cell where priority indication in DL DCI is configured to be performed (for convenience, such a cell is defined as "Type B cell"), <br> A. A priority indicator field is configured for at least one DCI format. <br> B. For Type B cell(s), a K1 set and a TDRA table are configured for LP and HP, respectively. <br> i. Specifically, the TDRA table is configured for each DCI format. Since a specific DCI format may be indicated with HP and other DCI formats may be indicated with only LP (that is, since a union of candidate SLIVs is different for each priority), it may be understood as a structure in which the TDRA table is configured for each of LP and HP. <br> C. Among all HPNs configured for Type B cell(s), some HPNs may be scheduled with HP, while the remaining HPNs may be scheduled with only LP. |
| i. For example, it may include the following case: a priority indicator field may be configured only for DCI format 1_2, and the size of a HARQ process ID field in the corresponding DCI is set smaller than the size of a HARQ process ID field in DCI format 1_1. |

**[1] Multiplexing of Type-1 codebook-based HARQ-ACKs with different priorities**

**1) Opt 1**

A. (For example, for Type A/B Cells in Table 8), for LP, the UE may configure (LP) A/N payloads for both Type A cell(s) and Type B cell(s) (by performing the SLIV pruning) based on combinations of {K1, TDRA} for LP, which are configured for each cell. For HP, the UE may configure (HP) A/N payloads only for the Type B cell(s) (by performing the SLIV pruning) based on combinations of {K1, TDRA} for HP.

B. For example, in this case, 1) the UE may concatenate the LP payload and the HP payload to configure a full A/N payload. The UE may perform joint encoding of the LP payload and the HP payload for the full A/N payload (by applying a maximum coding rate or $\beta_{offset}$ configured for HP) (i.e., mapping coded bits obtained from the joint encoding to a PUCCH/PUSCH). Alternatively, 2) the UE may perform separate encoding on the LP payload and the HP payload (by applying a maximum coding rate or $\beta_{offset}$ configured for each of LP and HP). The UE may concatenate HP coded bits and LP coded bits calculated by the separate encoding (i.e., mapping the concatenated coded bits to a PUCCH/PUSCH).

C. On the other hand, if the maximum number of REs available for HARQ-ACK mapping on a PUCCH/PUSCH exceeds a (specific) maximum coding rate, the UE may reduce the A/N payload size (based on priorities). For example, 1) the UE may preferentially reduce an A/N payload size corresponding to a cell with a higher cell index within the LP payload (through bundling/dropping, etc.). Additionally/alternatively, 2) the UE may preferentially reduce an A/N payload size corresponding to a cell where priority indication is configured (to be provided in DCI) within the LP payload (through bundling/dropping, etc.).

D. As a specific example, for a cell where the A/N payload size is to be reduced (within the LP payload), the UE may preferentially reduce an A/N corresponding to a PDSCH slot/SLIV that is later/earlier in time (through bundling/dropping, etc.)

**2) Opt 2**

A. (For example, for Type A/B Cells in Table 8), for LP, the UE may configure (LP) A/N payloads for both Type A cell(s) and Type B cell(s) (by performing the SLIV pruning) based on combinations of {K1, TDRA} configured for the Type A cell(s) and (by performing the SLIV pruning) based on combinations of {K1, TDRA} configured only for LP (except for those configured for HP) for the Type B cell(s). For HP, the UE may configure (HP) A/N payloads only for the Type B cell(s) (by performing the SLIV pruning) based on combinations of {K1, TDRA} configured for HP for the Type B cell(s).

i. For the Type B cell(s), if {K1, TDRA} configured for LP and {K1, TDRA} configured for HP are the same, the A/N payloads for the Type B cell(s) may not be configured within the LP payload.

B. For example, in this case, 1) the UE may concatenate the LP payload and the HP payload to configure a full A/N payload. The UE may perform joint encoding on the full A/N payload (by applying a maximum coding rate or $\beta_{offset}$ configured for HP) (i.e., mapping coded bits obtained from the joint encoding to a PUCCH/PUSCH). Alternatively, 2) the UE may perform separate encoding on the LP payload and the HP payload (by applying a maximum coding rate or $\beta_{offset}$ configured for each of LP and HP) and then concatenate HP coded bits and LP coded bits obtained from the separate encoding (i.e., mapping the concatenated coded bits to a PUCCH/PUSCH).

C. On the other hand, if the maximum number of REs available for HARQ-ACK mapping on a PUCCH/PUSCH exceeds a (specific) maximum coding rate, the UE may reduce the A/N payload size (based on priorities). For example, 1) the UE may preferentially reduce an A/N payload size corresponding to a cell with a higher cell index within the LP payload (through bundling/dropping, etc.). Additionally/alternatively, 2) the UE may preferentially reduce an A/N payload size corresponding to a cell where priority indication is configured (to be provided in DCI) within the LP payload (through bundling/dropping, etc.).

D. As a specific example, for a cell where the A/N payload size is to be reduced (within the LP payload), the UE may preferentially reduce an A/N corresponding to a PDSCH slot/SLIV that is later/earlier in time (through bundling/ dropping, etc.)

### 3) Opt 3

A. (For example, for Type A/B Cells in Table 8), for LP, the UE may configure (LP) A/N payloads only for Type A cell(s) (where no priority indication is configured) (by performing the SLIV pruning) based on combinations of {K1, TDRA} configured for the corresponding cell(s). For HP, the UE may configure (HP) A/N payloads for Type B cell(s) (where priority indication is configured) (by performing the SLIV pruning) based on the union of all K1 values configured for each of LP and HP and the union of all TDRAs (SLIVs) configured for each of LP and HP.

B. For example, in this case, 1) the UE may concatenate the LP payload and the HP payload to configure a full A/N payload. The UE may perform joint encoding on the full A/N payload (by applying a maximum coding rate or $\beta_{offset}$ configured for HP) (i.e., mapping coded bits obtained from the joint encoding to a PUCCH/PUSCH). Alternatively, 2) the UE may perform separate encoding on the LP payload and the HP payload (by applying a maximum coding rate or $\beta_{offset}$ configured for each of LP and HP) and then concatenate HP coded bits and LP coded bits obtained from the separate encoding (i.e., mapping the concatenated coded bits to a PUCCH/PUSCH).

C. On the other hand, if the maximum number of REs available for HARQ-ACK mapping on a PUCCH/PUSCH exceeds a (specific) maximum coding rate, the UE may preferentially reduce an A/N payload size corresponding to a cell with a higher cell index within the LP payload (through bundling/dropping, etc.). If there is no LP payload or if the maximum number of REs exceeds the maximum coding rate even after the whole is dropped, the UE may preferentially reduce an A/N payload size corresponding to a cell having a higher cell index within the HP payload.

D. In the above example, for a cell where the A/N payload size is to be reduced (within the LP payload), the UE may preferentially reduce an A/N corresponding to a PDSCH slot/SLIV that is later/earlier in time. In addition, for a cell where the A/N payload size is to be reduced (within the HP payload), the UE may preferentially reduce an A/N corresponding to a PDSCH slot/SLIV that may be scheduled with only LP.

### 4) Note

A. The UE configures a (full) A/N codebook/payload based on all combinations of {K1, TDRA} for both LP and HP according to Opt 1/2/3 above (or any other methods) only when neither LP nor HP is a fallback case or nothing case. For example, the fallback case or nothing case may be defined as follows.

**i. Fallback Case**

1. When A/N feedback needs to be transmitted in a specific slot, if a PDSCH, which is for the A/N feedback transmission in the specific slot, satisfies the following conditions, or if DCI that configures/indicates the specific slot as an A/N feedback transmission timing satisfies the following conditions:

ⓐ When there is only one PDSCH on a primary cell (Pcell) scheduled with fallback DCI format 1_0 indicating downlink assignment index (DAI) = 1,
ⓑ When there is only one PDCCH based on fallback DCI format 1_0 that commands SPS PDSCH release while indicating DAI = 1, or
ⓒ When there are only SPS PDSCH(s).

2. The UE may configure/transmit A/N feedback only for the PDSCH received on the Pcell (ⓐ Pcell PDSCH), the SPS PDSCH release PDCCH (ⓑ SPS release), and/or ⓒ the SPS PDSCH(s) (rather than the full payload) in the specific slot (hereinafter, an A/N payload configured in the fallback case is referred to as a fallback payload for convenience).

**ii. Nothing Case**

1. If there is no PDSCH related to A/N feedback transmission in a specific slot, or if there is no DCI that configures/indicates the specific slot as an A/N feedback transmission timing, the UE may not configure/transmit A/N feedback in the specific slot (hereinafter, an A/N payload configured in the nothing case is referred to as a zero-bit payload for convenience).

**iii. Full Case**

1. The full case refers to a case that does not belong to either the fallback case or the nothing case. In the full case, the UE may configure/transmit a full payload based on all combinations of {K1, TDRA} as A/N feedback as described above.
B. If at least one of LP and HP corresponds to the fallback case or nothing case, the UE may configure a full A/N codebook as follows (XP and YP may be LP and HP or HP and LP, respectively).

i. Alt 1

1. If XP is the full case and YP is the fallback case, the UE may operate as follows.

ⓐ For XP, the UE may configure a full payload by performing the SLIV pruning based on combinations of {K1, TDRA} configured for XP. For YP, the UE may configure a fallback payload for a Pcell PDSCH, SPS release, or SPS PDSCH(s) indicated/configured for YP. The UE may configure a full A/N codebook by concatenating the two configured payloads (coded bits therefor).

(i) As a specific example, if YP is HP and only SPS PDSCH(s) are indicated/configured for HP, the UE may exceptionally drop LP HARQ-ACK transmission corresponding to XP and configure (encode) a fallback payload only for HP (SPS PDSCH(s)) in order to configure a full A/N codebook.

2. If XP is the full case and YP is the nothing case, the UE may operate as follows.

ⓐ For XP, the UE may configure a full payload by performing the SLIV pruning based on combinations of {K1, TDRA} configured for XP. For YP, the UE may configure a zero-bit payload (that is, the UE may skip configuring an A/N payload). The UE may configure a full A/N codebook only with the XP payload (coded bits therefor).

3. If XP is the fallback case and YP is the fallback case, the UE may operate as follows.

ⓐ For XP, the UE may configure a fallback payload only for a Pcell PDSCH, SPS release, or SPS PDSCH(s) indicated/configured for XP for XP. For YP, the UE may configure a fallback payload only for a Pcell PDSCH, SPS release, or SPS PDSCH(s) indicated/configured for YP. The UE may configure a full A/N codebook by concatenating the two configured payloads (coded bits therefor).

(i) As a specific example, if YP is HP and t only SPS PDSCH(s) are indicated/configured for HP, the UE may exceptionally drop LP HARQ-ACK transmission corresponding to XP and configure (encode) a fallback payload only for HP (SPS PDSCH(s)) in order to configure a full A/N codebook.

4. If XP is the fallback case and YP is the nothing case, the UE may operate as follows.

ⓐ For XP, the UE may configure a fallback payload only for a Pcell PDSCH, SPS release, or SPS PDSCH(s) indicated/configured for XP. For YP, the UE may configure a zero-bit payload (that is, the UE may skip configuring an A/N payload). The UE may configure a full A/N codebook only with the XP payload (coded bits therefor).

ii. Alt 2

1. If XP is the full case and YP is the fallback case, the UE may operate as follows.

ⓐ The UE may configure a full payload for each of LP and HP (based on all combinations of {K1, TDRA} configured for LP and HP) according to the above-described Opt 1/2/3 (or any other methods).

(i) As a specific example, if YP is HP and only SPS PDSCH(s) are indicated/configured for HP, the UE may exceptionally drop LP HARQ-ACK transmission corresponding to XP and configure (encode) a fallback payload only for HP (SPS PDSCH(s)) in order to configure a full A/N codebook.

2. If XP is the full case and YP is the nothing case, the UE may operate as follows.

ⓐ For XP, the UE may configure a full payload by performing the SLIV pruning based on combinations of {K1, TDRA} configured for XP. For YP, the UE may configure a zero-bit payload (that is, the UE may skip configuring an A/N payload). The UE may configure a full A/N codebook only with the XP payload (coded bits therefor).

3. If XP is the fallback case and YP is the fallback case, the UE may operate as follows.

ⓐ Case 1: When only SPS PDSCH(s) are indicated/configured for XP and only SPS PDSCH(s) are indicated/configured for YP,

(i) The UE may configure a fallback payload only for the SPS PDSCH(s) indicated/configured for XP. The UE may configure a fallback payload only for the SPS PDSCH(s) indicated/configured for YP. The UE may configure a full A/N codebook by concatenating the two configured payloads (coded bits therefor).

① In this case, the UE may drop LP HARQ-ACK transmission and configure (encode) the fallback payload only for HP (SPS PDSCH(s)) to configure the full A/N codebook.

B. Case 2: If a Pcell PDSCH or SPS release is indicated/configured for XP and SPS PDSCH(s) (a Pcell PDSCH or SPS release) is indicated/configured for YP, the UE may operate as follows.

i. The UE may configure a full payload for each of LP and HP (based on all combinations of {K1, TDRA} configured for LP and HP) according to the above-described Opt 1/2/3 (or any other methods).

1. As a specific example, if YP is HP and only SPS PDSCH(s) are indicated/configured for HP, the UE may exceptionally drop LP HARQ-ACK transmission corresponding to XP and configure (encode) a fallback payload only for HP (SPS PDSCH(s)) in order to configure a full A/N codebook.

4. If XP is the fallback case and YP is the nothing case, the UE may operate as follows.

ⓐ For XP, the UE may configure a fallback payload only for a Pcell PDSCH, SPS release, or SPS PDSCH(s) indicated/configured for XP. For YP, the UE may configure a zero-bit payload (that is, the UE may skip configuring an A/N payload). The UE may configure a full A/N codebook only with the XP payload (coded bits therefor).

**[2] Multiplexing of Type-3 codebook-based HARQ-ACKs with different priorities**

**1) Opt 1**

A. (For example, for Type A/B Cells in Table 8), for LP, the UE may configure (LP) A/N payloads corresponding to {all HPNs configured for Type A cell(s)} and {HPNs schedulable with LP among all HPNs configured for Type B cell(s)}. For HP, the UE may configure (HP) A/N payloads corresponding to HPNs schedulable with HP among all HPNs configured for the Type B cell(s).

B. In this case, the UE may operate as follows. 1) The UE may concatenate the LP payload and the HP payload to configure a full A/N payload and then perform joint encoding of the LP payload and the HP payload for the full A/N payload (by applying a maximum coding rate or $\beta_{offset}$ configured for HP) (i.e., mapping coded bits obtained from the joint encoding to a PUCCH/PUSCH). Alternatively, 2) the UE may perform separate encoding on the LP payload and the HP payload (by applying a maximum coding rate or $\beta_{offset}$ configured for each of LP and HP) and then concatenate the coded bits for each priority, which are obtained from the separate encoding, (i.e., mapping the concatenated coded bits to a PUCCH/PUSCH).

C. On the other hand, if the maximum number of REs available for HARQ-ACK mapping on a PUCCH/PUSCH exceeds a (specific) maximum coding rate, the UE may reduce the A/N payload size (based on priorities). For example, 1) the UE may preferentially reduce an A/N payload size corresponding to a cell with a higher cell index within the LP payload (through bundling/dropping, etc.). Additionally/alternatively, 2) the UE may preferentially reduce an A/N payload size corresponding to a cell where priority indication is configured (to be provided in DCI) within the LP payload (through bundling/dropping, etc.).

D. As a specific example, for a cell where the A/N payload size is to be reduced (within the LP payload), the UE may preferentially reduce an A/N corresponding to a higher/larger HPN (through bundling/ dropping, etc.).

**2) Opt 2**

A. (For example, for Type A/B Cells in Table 8), for LP, the UE may configure (LP) A/N payloads corresponding to {All HPNs configured for Type A cell(s)} and {HPNs schedulable with only LP (rather than HP) among all HPNs configured for Type B cell(s)}. For HP, the UE may configure (HP) A/N payloads corresponding to only HPNs schedulable with HP among all HPNs configured for the Type B cell(s).

i. If all HPNs configured for the Type B cell(s) are capable of being scheduled with HP, the A/N payloads corresponding to the Type B cell(s) may not be configured within the LP payload

B. In this case, the UE may operate as follows. 1) The UE may concatenate the LP payload and the HP payload to configure a full A/N payload and then perform joint encoding of the LP payload and the HP payload for the full A/N payload (by applying a maximum coding rate or $\beta_{offset}$ configured for HP) (i.e., mapping coded bits obtained from the joint encoding to a PUCCH/PUSCH). Alternatively, 2) the UE may perform separate encoding on the LP payload and the HP payload (by applying a maximum coding rate or $\beta_{offset}$ configured for each of LP and HP) and then concatenate HP coded bits and LP coded bits obtained from the separate encoding (i.e., mapping the concatenated coded bits to a PUCCH/PUSCH).

C. On the other hand, if the maximum number of REs available for HARQ-ACK mapping on a PUCCH/PUSCH exceeds a (specific) maximum coding rate, the UE may reduce the A/N payload size (based on priorities). For example, 1) the UE may preferentially reduce an A/N payload size corresponding to a cell with a higher cell index within the LP payload (through bundling/dropping, etc.). Additionally/alternatively, 2) the UE may preferentially reduce an A/N payload size corresponding to a cell where priority indication is configured (to be provided in DCI) within the LP payload (through bundling/dropping, etc.).

D. As a specific example, for a cell where the A/N payload size is to be reduced (within the LP payload), the UE may preferentially reduce an A/N corresponding to a higher/larger HPN (through bundling/ dropping, etc.).

**3) Opt 3**

A. (For example, for Type A/B Cells in Table 8), for LP, the UE may configure (LP) A/N payloads corresponding to all HPNs configured only for Type A cell(s) (where no priority indication is configured). For HP, the UE may configure (HP) A/N payloads corresponding to all HPNs configured for Type B cell(s) (where priority indication is configured).

B. In this case, the UE may operate as follows. 1) The UE may concatenate the LP payload and the HP payload to configure a full A/N payload and then perform joint encoding of the LP payload and the HP payload for the full A/N payload (by applying a maximum coding rate or $\beta_{offset}$ configured for HP) (i.e., mapping coded bits obtained from the joint encoding to a PUCCH/PUSCH). Alternatively, 2) the UE may perform separate encoding on the LP payload and the HP payload (by applying a maximum coding rate or $\beta_{offset}$ configured for each of LP and HP) and then concatenate HP coded bits and LP coded bits obtained from the separate encoding (i.e., mapping the concatenated coded bits to a PUCCH/PUSCH).

C. On the other hand, if the maximum number of REs available for HARQ-ACK mapping on a PUCCH/PUSCH exceeds a (specific) maximum coding rate, the UE may reduce the A/N payload size (based on priorities). For example, the UE may preferentially reduce an A/N payload size corresponding to a cell with a higher cell index within the LP payload (through bundling/dropping, etc.). If there is no LP payload or if the maximum number of REs exceeds the maximum coding rate even after the whole is dropped, the UE may preferentially reduce an A/N payload size corresponding to a cell having a higher cell index within the HP payload.

D. As a specific example, for a cell where the A/N payload size is to be reduced (within the LP payload), the UE may preferentially reduce an A/N corresponding to a higher/larger HPN (through bundling/ dropping, etc.). For a cell where the A/N payload size is to be reduced (within the HP payload), the UE may preferentially reduce an A/N corresponding to an HPN schedulable with only LP if necessary.

**[3] Triggering of Type-3 codebook-based HARQ-ACK feedback with specific priority**

A specific HARQ-ACK may be dropped. For example, depending on DL/UL configurations in the time division duplex (TDD) situation, a PUCCH resource carrying a specific HARQ-ACK (e.g., HARQ-ACK for SPS PDSCH transmission) may be canceled/dropped due to collision with a specific DL symbol. For example, when multiplexing transmission (on the same PUCCH/PUSCH) is not configured/allowed between UCIs with different priorities or between a PUSCH and UCI, a specific HARQ-ACK configured/indicated with LP may be dropped due to collision with specific UCI (e.g., HARQ-ACK) configured/indicated with HP or collision with a specific PUSCH.

Accordingly, it may be indicated by DCI that feedback/transmission is performed by configuring a (Type-3 codebook-based) A/N payload only for HPNs schedulable with only LP (rather than HP) per cell for a set of all cells (a specific cell group or a specific cell) configured to the UE. Additionally, it may also be indicated by DCI whether to perform feedback/transmission by configuring an A/N payload for only HPNs schedulable with only LP (for each cell) or configuring an A/N payload for all HPNs schedulable with LP.

As another method, it may be indicated by DCI that feedback/transmission is performed by configuring a (Type-3 codebook-based) A/N payload only for HPNs schedulable with only HP (rather than LP) per cell for a set of all cells (a specific cell group or a specific cell) configured to the UE. Additionally, it may also be indicated by DCI whether to perform feedback/transmission by configuring an A/N payload for only HPNs schedulable with only HP (for each cell) or configuring an A/N payload for all HPNs schedulable with HP.

**[4] Handling of ambiguity in LP payload size in multiplexing of HP HARQ-ACK and LP HARQ-ACK**

1) Considering the possibility of misalignment between the UE and BS in the payload size of an LP HARQ-ACK (which may occur due to DL DCI detection failure, etc.) when the LP HARQ-ACK is multiplexed/configured with a HP HARQ-ACK on the same PUCCH/PUSCH, information on the payload size of the LP HARQ-ACK (or information on determination thereof) may be signaled/indicated by DCI (i.e., HP DL DCI) scheduling a PDSCH corresponding to the HP HARQ-ACK and/or DCI (i.e., HP UL DCI) scheduling a HP PUSCH.

A. As an example of indicating payload size information based on DCI, if a plurality of candidate (LP HARQ-ACK) payload sizes are preconfigured (or predefined) through RRC, one of the plurality of candidate payload sizes may be indicated by DCI. The values/number of multiple candidate payload sizes (configured through RRC) may vary depending on the HARQ-ACK codebook type configured for the LP HARQ-ACK.

B. For example, when a Type-2 codebook is configured for a LP HARQ-ACK, the candidate payload sizes may have the following four values: {X bits, Y bits, Z bits, W bits} (where X < Y < Z < W) and X = 0. Alternatively, the candidate payload sizes may have the following four values: {X bits, Y bits, Z bits, W bits} (where 0 < X < Y < Z < W). When the candidate payload sizes have the following four values: {X bits, Y bits, Z bits, W bits} (where 0 < X < Y < Z < W), if the W bits with the largest payload size is indicated by HP DCI, and if LP DL DCI (and/or a PDSCH corresponding to the LP HARQ-ACK) actually received by the UE does not exist, the UE may assume/determine the payload size of the LP HARQ-ACK as 0 bits, exceptionally. For convenience, this method is called "A/N payload size indication".

    i. When the (LP HARQ-ACK) payload size indicated by DCI (hereinafter referred to as $P_d$ bits) is greater than the actual (LP HARQ-ACK) payload size calculated by the UE (based on actual PDSCH reception) (hereinafter referred to as $P_u$ bits), the UE may configure a payload corresponding to the $P_d$ bits corresponding to the indicated size (on a PUCCH/PUSCH) and map {$P_d$ - $P_u$} bits to NACKS. For example, the UE may map the first $P_u$ bits in the corresponding payload to the actual payload and map the last {$P_d$ - $P_u$} bits to NACKS.

    ii. In addition, when the payload size indicated by the DCI, $P_d$ bits are smaller than the actual (LP HARQ-ACK) payload size calculated by the UE (based on actual PDSCH reception), $P_u$ bits, the UE may configure a payload corresponding to the indicated size, $P_d$ bits (on the PUCCH/PUSCH) and may drop transmission of {$P_u$ - Pa} bits. For example, the UE may map the first $P_d$ bits in the actual payload (onto the PUCCH/PUSCH) and drop transmission of the last {$P_u$ - $P_a$} bits (in the actual payload).

    iii. As a specific example, a (candidate) payload size indicated (or configured) by DCI (RRC) and an actual payload size calculated by the UE (based on PDSCH reception) (and a payload configured on a PUCCH/PUSCH) may be configured/indicated/determined/configured (i) based on only a HARQ-ACK corresponding to a DAI-based PDSCH (scheduled by DCI indicating a DAI) (except for a HARQ-ACK corresponding to an SPS PDSCH) or (ii) based on all HARQ-ACKs including both the HARQ-ACK corresponding to the DAI-based PDSCH and the HARQ-ACK corresponding to the SPS PDSCH.

    iv. For the former case (i), the HARQ-ACK payload corresponding to the DAI-based PDSCH may be configured based on the payload size indicated by DCI, and the HARQ-ACK payload corresponding to the SPS PDSCH may be configured based on PDSCH reception of the UE. For the latter case (ii), the full HARQ-ACK payload for both the DAI-based PDSCH and the SPS PDSCH may be configured based on the payload size indicated/determined by DCI.

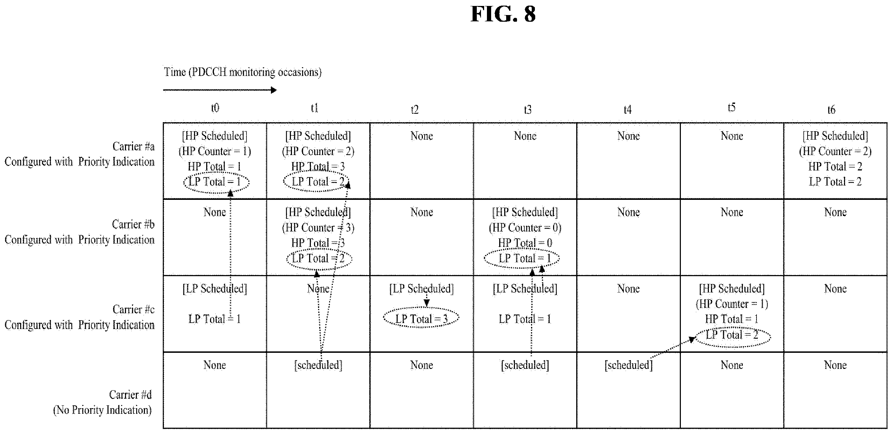

C. As another example, when a Type-2 codebook is configured for a LP HARQ-ACK, a total DAI field/information (informing the number of scheduled LP DCIs/PDSCHs) for the corresponding LP HARQ-ACK may be configured/indicated by HP DL/LTL DCI. For example, referring to FIG. 8, it is assumed that the Type-2 codebook is configured for four carriers: carrier #a, carrier #b, carrier #c, and carrier #d among a plurality of carriers configured to the UE. Also, it is assumed that priorities are indicated by DCI for three carriers: carrier #a, carrier #b, and carrier #c but no priority is provided for carrier #d. On PDCCH monitoring occasion t0, a HP PDSCH is scheduled on carrier #a, and a LP PDSCH is scheduled on carrier #c. In this case, first DCI related to a HARQ-ACK report for the HP PDSCH on carrier #a (e.g., DL DCI scheduling a HP PDSCH or UL DCI indicating a HP HARQ-ACK report) may include not only a (total) DAI for scheduling the HP PDSCH on carrier #a but also a (total) DAI for scheduling the LP PDSCH on carrier #c. Similarly, on PDCCH monitoring occasion t1, second DCI related to a HARQ-ACK report for the HP PDSCH on carrier #a and third DCI related to a HARQ-ACK report for a HP PDSCH on carrier #b may include not only (total) DAIs for scheduling the HP PDSCHs on carriers #a and #b but also a (total) DAI for scheduling a PDSCH on carrier #d (by considering the PDSCH with no priority indication as LP).

If transmission of a code block group (CBG) based (LP) PDSCH is configured on a specific cell, the total DAI field/information may be configured/indicated (in HP DL/UL DCI) as follows (in order to prevent HP DCI overhead from increasing).

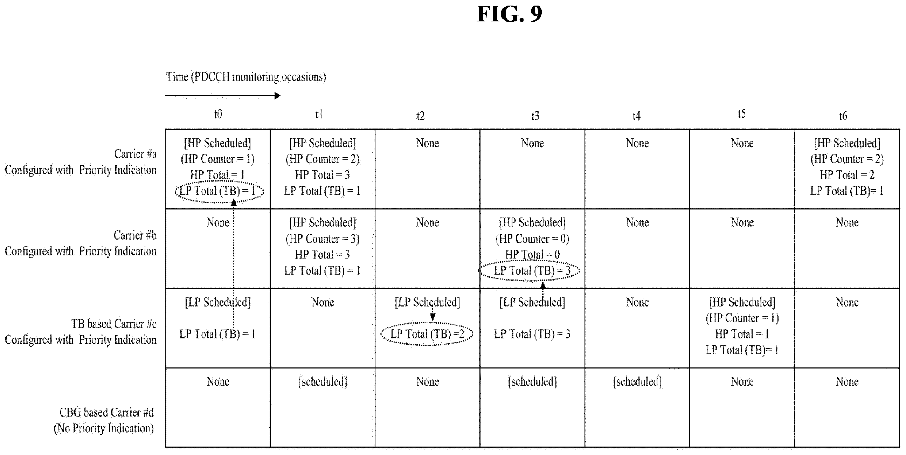

    i. Opt 1: One total DAI field/information may be configured/indicated only for a LP TB-based PDSCH (or HARQ-ACK sub-codebook related thereto) in HP DL/UL DCI (in addition to configuring/indicating a total DAI field/information for a HP PDSCH as in the prior art). However, no total DAI field/information may be configured/indicated for a LP CBG-based PDSCH (or HARQ-ACK sub-codebook related thereto). For example, referring to FIG. 9, it is assumed that priorities are indicated by DCI for three carriers: carrier #a, carrier #b, and carrier #c, but no priority indication is provided for carrier #d. It is also assumed that TB-based transmission is configured for carrier #c and CBG-based transmission is configured for carrier #d. First DCI related to a HARQ-ACK report for a HP PDSCH on carrier #a (e.g., DL DCI scheduling a HP PDSCH or UL DCI indicating a HP HARQ-ACK report) may include not only a (total) DAI for scheduling the HP PDSCH on carrier #a but also a (total) DAI for scheduling the LP TB-based PDSCH on carrier #c. On PDCCH monitoring occasion t1, second DCI related to a HARQ-ACK report for the HP PDSCH on carrier #a and third DCI related to an ARQ-ACK report for a HP PDSCH on carrier #b may update (total) DAIs for scheduling the HP PDSCHs on carriers #a and #b, but may not update a LP (total) DAI for scheduling the CBG-based PDSCH on carrier #d. However, fourth DCI for scheduling the CBG-based PDSCH on carrier #d on t1 may include a DAI for CBG in which scheduling of the CBG-based PDSCH on t1 is reflected. On PDCCH monitoring occasion t3, fifth DCI related to a HARQ-ACK report for the HP PDSCH on carrier #b may update a HP (total) DAI by reflecting scheduling of the HP PDSCH on carrier #b and a LP (total) DAI by reflecting scheduling of the LP TB-based PDSCH on carrier #c. However, the fifth DCI may not update a LP (total) DAI for scheduling the CBG-based PDSCH on carrier #d. It is assumed that on t5 and t6 of FIG. 9, TB-based transmission is configured on carriers #a and #b (for example, it is shown that a HP DAI for TB is updated by a HP TB-based PDSCH on carrier #c). However, this is for convenience of explanation, and the present disclosure is not limited thereto. For example, a DAI for a carrier group configured with TB-based scheduling and a DAI for a carrier group configured with CBG-based scheduling may be separately calculated. For example, HP DL/UL DCI related to HP HARQ-ACK transmission on a carrier where priority indication is configured may include at least two or more of (i) DAI for HP TB-based PDSCH, (ii) DAI for CBG-based PDSCH, and (iii) DAI for LP TB-based PDSCH. Accordingly, it is possible to prevent the overhead of HP DL/UL DCI (HP PDCCH) from excessively increasing by dropping a DAI (e.g., LP total DAI for CBG) for scheduling the LP CBG-based PDSCH in the HP DL/LTL DCI.

1. As a specific example therefor, when the LP HARQ-ACK and HP HARQ-ACK are multiplexed on the same PUCCH/PUSCH (indicated/scheduled by HP DCI) (or when the LP HARQ-ACK is multiplexed with a HP PUCCH/PUSCH), only a HARQ-ACK (sub-codebook) for the LP TB-based PDSCH may be multiplexed (with the HP HARQ-ACK) (by configuring the HARQ-ACK (sub-codebook) based on a total DAI value indicated by the total DAI field). In addition, (multiplexing) transmission of a HARQ-ACK (sub-codebook) for the LP CBG-based PDSCH may be dropped (this is defined as Opt 1-1). For example, it may be defined/configured that a Type-2 HARQ-ACK for CBG-based PDSCH scheduling that is not indicated as HP (for example, a PDSCH indicated as LP or with no priority indication) is not multiplexed with a UL signal including the HP HARQ-ACK (e.g., a PUCCH/PUSCH including a HP Type-2 HARQ-ACK or a PUCCH/PUSCH multiplexed with a HP Type-2 HARQ-ACK and a LP Type-2 HARQ-ACK for a TB-based PDSCH). For example, it may be defined that a Type-2 HARQ-ACK for LP CBG and a HP HARQ-ACK are not (simultaneously) transmitted in one signal. That is, the Type-2 HARQ-ACK for LP CBG may not be included in a signal for transmitting at least the HP HARQ-ACK. If the Type-2 HARQ-ACK for LP CBG overlaps/collisions with the HP HARQ-ACK in the time domain, the Type-2 HARQ-ACK for LP CBG may be omitted/dropped. Alternatively, the Type-2 HARQ-ACK for LP CBG may be transmitted in a signal/resource different from that for the HP HARQ-ACK. When a UL signal including the HP HARQ-ACK is UL_A/N SIG, if the Type-2 HARQ-ACK for LP CBG is not included in UL_A/N SIG, it is possible to minimize an increase in the overhead of UL_A/N SIG. Compared to when the Type-2 HARQ-ACK for LP CBG is included, there is an advantage in that HP HARQ-ACK reporting is more reliable and robust (based on gain in the encoding rate). For example, when the Type-2 HARQ-ACK for LP CBG is not included in UL_AIN SIG, it may include a case where there are not enough resources for the Type-2 HARQ-ACK for LP CBG in UL_AIN SIG (e.g., UCI payload size including HP Type 2 HARQ-ACK > first value, or payload size of (HP Type 2 HARQ-ACK + P Type 2 HARQ-ACK for TB-based PDSCH) > second value, or payload size of Type 2 HARQ-ACK for LP CBG > third value). For example, assuming that the UE needs to inevitably drop X bits due to lack of resources on UL_A/N SIG, dropping (at least X bits of) the Type-2 HARQ-ACK for LP CBG may be most desirable in terms of system efficiency and reliability. When the X bits need to be dropped, dropping the HP HARQ-ACK, which requires high reliability and/or low delay, may not be appropriate. If X bits of a Type-2 HARQ-ACK for LP TB are dropped, it may cause retransmission of X TBs, whereas if the X bits of the Type-2 HARQ-ACK for LP CBG are dropped, it may cause retransmission of X CBGs. Thus, dropping the Type-2 HARQ-ACK for LP CBG may be relatively effective in reducing retransmission overhead.

2. Alternatively, in the same situation as above, a HARQ-ACK sub-codebook (size) for the LP TB-based PDSCH may be configured (determined) based on a total DAI value indicated by the total DAI field, and a HARQ-ACK sub-codebook (size) for the LP CBG-based PDSCH may be configured (determined) based on the last counter DAI (or total DAI) value (related to the CBG-based PDSCH) indicated by last received LP DL DCI (this is defined as Opt 1-2). For example, the UE may transmit a Type-2 HARQ-ACK for LP CBG based on the DAI of the most recently received LP DL DCI (e.g., DL DCI scheduling the LP CBG-based PDSCH). When the Type-2 HARQ-ACK for LP CBG is transmitted, the UE may configure the Type-2 HARQ-ACK for LP CBG in the form of a sub-codebook included in UL_A/N SIG. For example, in the situation of FIG. 9, the UE may transmit the Type-2 HARQ-ACK for LP CBG based on a DAI included in DL DCI scheduling a LP PDSCH on carrier #d on t4.

ⓐ In the same situation as above, if LP UL DCI including/indicating a UL DAI value (related to the CBG-based PDSCH) is received, a HARQ-ACK sub-codebook (size) for the LP CBG-based PDSCH may be configured (determined) based on the corresponding UL DAI value (rather than the counter/total DAI value indicated by the LP DL DCI). For example, the UE may transmit a Type-2 HARQ-ACK for LP CBG based on the DAI of the most recently received LP UL DCI (i.e., UL DCI indicating reporting of the Type-2 HARQ-ACK for LP CBG). When the Type-2 HARQ-ACK for LP CBG is transmitted, the UE may configure the Type-2 HARQ-ACK for LP CBG in the form of a sub-codebook included in UL_A/N SIG.

3. As another method, which one of Opt 1-1 and Opt 1-2 described above is applied (e.g., whether the Type-2 HARQ-ACK for LP CBG is dropped) may be configured through RRC (or indicated by DCI).

ii. Opt 2: When only one total DAI field A is configured in HP DCI (in addition to configuring/indicating a total DAI field/information for a HP PDSCH as in the prior art), the following two cases may be considered (for LP): Case 1) if a TB-based PDSCH is scheduled/received, total DAI information indicated by the corresponding field A may correspond to/be applied to the TB-based PDSCH (or HARQ-ACK sub-codebook related thereto); and Case 2) if only a CBG-based PDSCH is scheduled/received, the total DAI information indicated by the corresponding field A may correspond to/be applied to the CBG-based PDSCH (or HARQ-ACK sub-codebook related thereto).

1. When a LP HARQ-ACK and a HP HARQ-ACK are multiplexed on the same PUCCH/PUSCH (indicated/scheduled by HP DCI) (or when the LP HARQ-ACK is multiplexed with a HP PUCCH/PUSCH), for Case 1, only a HARQ-ACK corresponding to a LP TB-based PDSCH may be multiplexed with the HP HARQ-ACK, and (multiplexing) transmission of a HARQ-ACK corresponding to a LP CBG-based PDSCH may be dropped. For Case 2, the HARQ-ACK corresponding to the LP CBG-based PDSCH may be multiplexed with the HP HARQ-ACK.

iii. Opt 3: When one total DAI field A and a one-bit flag (or indicator) indicating one of a TB and a CBG are configured in HP DCI (in addition to configuring/indicating a total DAI field/information for a HP PDSCH as in the prior art), the following two cases may be considered (for LP): Case 1) If a TB is indicated by the corresponding flag, total DAI information indicated by the total DAI field A may correspond to/be applied to a TB-based PDSCH (or HARQ-ACK sub-codebook related thereto); and Case 2) If a CBG is indicated by the corresponding flag, total DAI information indicated by the total DAI field A may correspond to/be applied to a CBG-based PDSCH (or HARQ-ACK sub-codebook related thereto).
When a LP HARQ-ACK and a HP HARQ-ACK are multiplexed on the same PUCCH/PUSCH (indicated/scheduled by HP DCI) (or when the LP HARQ-ACK is multiplexed with a HP PUCCH/PUSCH), for Case 1, only a HARQ-ACK corresponding to a LP TB-based PDSCH may be multiplexed with the HP HARQ-ACK, and (multiplexing) transmission of a HARQ-ACK corresponding to a LP CBG-based PDSCH may be dropped. For Case 2, the HARQ-ACK corresponding to the LP CBG-based PDSCH may be multiplexed with the HP HARQ-ACK, and transmission of the HARQ-ACK corresponding to the LP TB-based PDSCH LP may be dropped.
iv. Opt 4: When one total DAI field A is configured in HP DL/UL DCI (in addition to configuring/indicating a total DAI field/information for a HP PDSCH as in the prior art), the UE/BS may be configured to apply one total DAI value indicated by the corresponding field A to both a TB-based PDSCH (or HARQ-ACK sub-codebook related thereto) and a CBG-based PDSCH (or HARQ-ACK sub-codebook related thereto) (for LP).

1. For the case where one total DAI field A is applied to both a (LP) TB-based PDSCH and a (LP) CBG-based PDSCH, it is assumed that when the total DAI field A is consists of two bits as in the prior art, the total number of TB-based PDSCHs scheduled by the BS is $M1 = x1 * 4 + y1$ (i.e., total DAI calculation for M1 is {x1 mod 4 + y1}) and the total number of scheduled CBG-based PDSCHs is $M2 = x2 * 4 + y2$ (i.e., total DAI calculation for M2 is {x2 mod 4 + y2}) (where "A mod B" means the remainder of dividing A by B). When $y1 \neq y2$ (for example, only one of y1 and y2 is indicated by the total DAI field A), if the UE fails to detect LP DCI scheduling a LP PDSCH, there may be misalignment (between the UE and BS) for the configuration/size of HARQ-ACK sub-codebooks for the TB-based PDSCH and/or CBG-based PDSCH.

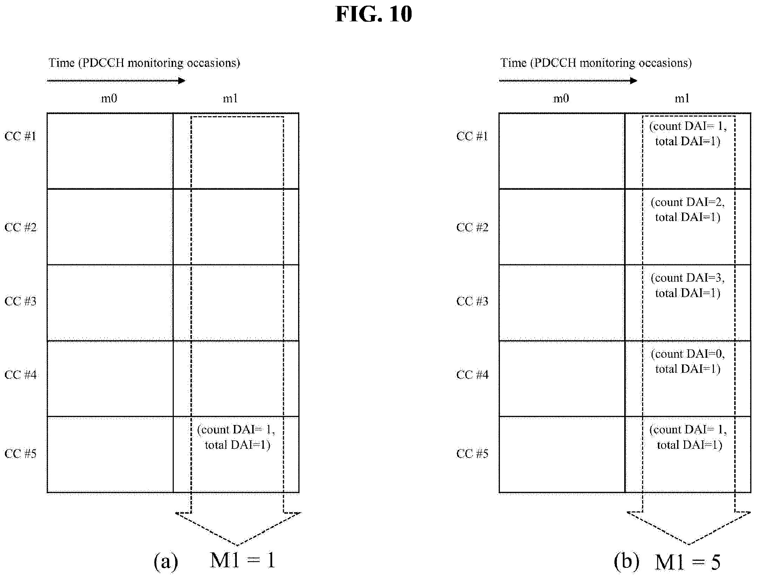

For example, the design of the current NR system will be described with reference to FIG. 10. When DCI last received by the UE on PDCCH monitoring occasion m#1 is (count DAI = 1, total DAI = 1) (if the number of DCIs (consecutive in terms of the count DAI) missed by the UE does not exceed a maximum of 3), the UE may identify whether (count DAI = 1, total DAI = 1) means (a) M1 = 1 or (b) M1 = 5 on PDCCH monitoring occasion m#1 (alignment between the BS and UE). However, if the UE misses four or more DCIs (consecutive in terms of the count DAI) (that is, if the UE misses all of CC#1 DCI = (count DAI = 1, total DAI = 1), CC#2 DCI = (count DAI = 2, total DAI = 1), CC#3 DCI = (count DAI = 3, total DAI = 1), and CC#4 DCI = (count DAI = 0, total DAI = 1) at PDCCH monitoring occasion m#1), the UE may not identify whether (count DAI = 1, total DAI = 1) indicated by CC#5 DCI means (a) M1 = 1 or (b) M1 = 5. However, in the current NR system, since the probability that the UE misses four or more DCIs (consecutive in terms of the count DAI) is negligible, the possibility of misalignment between the UE and BS in the HARQ-ACK payload is not high. Herein, count DAI = 0 or total DAI = 0 may mean the same as count DAI = 4 or total DAI = 4.

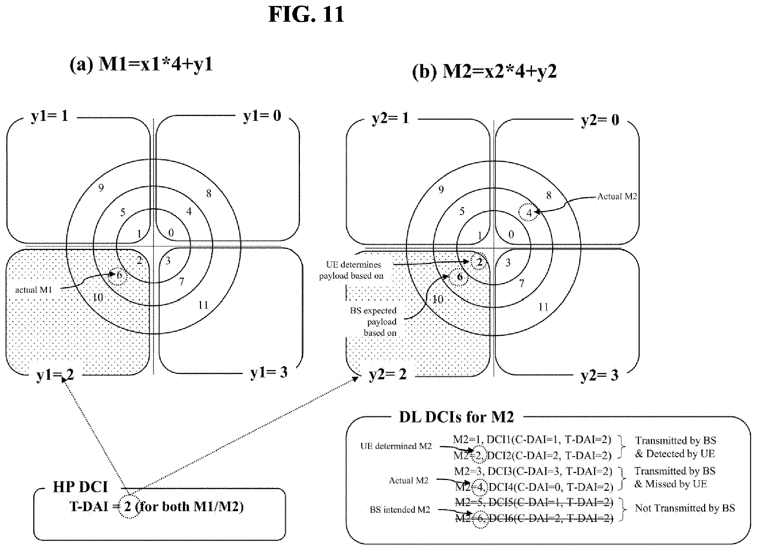

When one total DAI field A is applied to both a (LP) TB-based PDSCH and a (LP) CBG-based PDSCH, even if the UE misses only two DCIs, misalignment in the HARQ-ACK payload may occur between the UE and BS. For a specific example, referring to FIG. 11, it is assumed that on a specific PDCCH monitoring occasion, the number of scheduled (LP) TB-based PDSCHs, M1 is 6 and the number of scheduled (LP) CBG-based PDSCHs, M2 is 4. The BS may transmit one total DAI field A to be applied to the TB-based PDSCHs and CBG-based PDSCHs in HP DCI. In this case, it is assumed that the value of the total DAI field A is determined as y1 = 2 based on M1 = 6. When the following relationship: total DAI field A = 2 is applied to M1, the BS/UE may determine the payload of an A/N sub-codebook for the TB-based PDSCHs based on M1 = 6. On the other hand, when the following relationship: total DAI field A = 2 is applied to M2, the BS may expect that the UE will determine the payload of an A/N sub-codebook for the CBG-based PDSCHs based on M2 = 6. The fact that the BS expects that the payload of the A/N sub-codebook for the CBG-based PDSCHs is determined with M2 = 6, which is greater than the actual value, M2 = 4, it may mean that the BS expects that the UE will report NACKs all for two (= 6-4) CBG-based PDSCHs that are not actually performed. If the UE misses no DCIs scheduling CBG-based PDSCHs, misalignment in the HARQ-ACK payload may not occur between the UE and BS. However, if the UE (consecutively) misses two or more of the DCIs scheduling the CBG-based PDSCHs, misalignment in the HARQ-ACK payload may occur. For example, when a total of four DCIs: {DCI1, DCI2, DCI3, DCI4} are transmitted by the BS but {DCI5, DCI6} are not transmitted by the BS, the BS may assume that the UE misses {DCI5, DCI6}. On the other hand, if the UE actually successfully receives {DCI1, DCI2} but misses {DCI3, DCI4}, the UE may erroneously determine that M2 = 2 based on {DCI1, DCI2, and HP DCI} and then determine the payload size of the A/N sub-codebook for the CBG-based PDSCHs based on M2 = 2. That is, since the BS expects that the payload size of the A/N sub-codebook for the CBG-based PDSCHs will be determined based on M2 = 6, and the UE determines the payload size of the A/N sub-codebook for the CBG-based PDSCHs based on M2 = 2, misalignment may occur between the BS and UE. As described above, misalignment may occur even if detection of two DCIs fails.

In the above description, it is assumed that M1 and y1 are related to TB-based PDSCHs and M2 and y2 are related to CBG-based PDSCHs. However, this is for convenience of explanation, and the present disclosure is not limited thereto. For example, contrary to the above example, M1 and y1 may be related to CBG-based PDSCHs, and M2 and y2 may be related to TB-based PDSCHs.

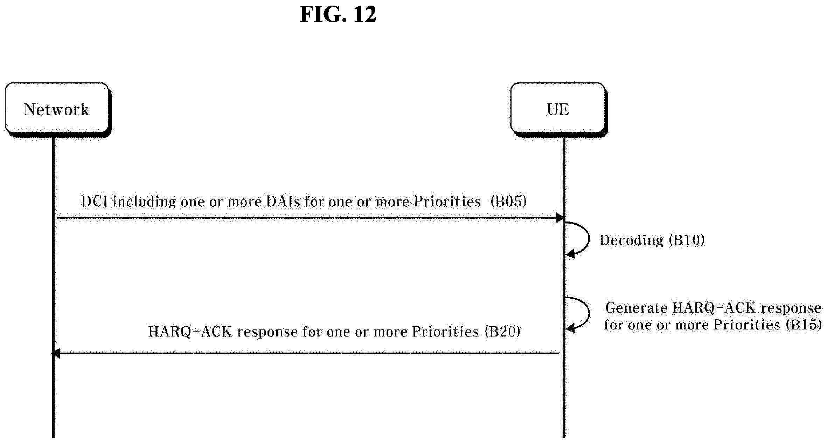

2. To prevent the above misalignment problem, one total DAI field A (included in HP DCI) may consist of three bits (which is different from the size of the conventional total DAI field) (for example, the total DAI value indicated by the total DAI field A may be determined based on modulo 8 operation). Accordingly, if the value indicated by the total DAI field A is Y, the UE may configure a HARQ-ACK sub-codebook (size) for each PDSCH type (e.g., TB-based PDSCH or CBG-based PDSCH) based on the minimum value of (X*8 + Y) equal to or greater than the accumulated order value (e.g., accumulated counter DAI value) of DCI/PDSCH that is last scheduled/received for each of the TB-based PDSCH and CBG-based PDSCH (total DAI calculation for (X*8 + Y) is {X mod 8 + Y}). For example, the BS may transmit the total DAI field A related to a second priority (e.g., LP) in DL/UL DCI related to a first priority (e.g., HP) (B05 of FIG. 12). The DL/LTL DCI related to the first priority may include at least one DAI field related to the first priority. For example, the DL/UL DCI related to the first priority may include at least one of a HP counter DAI field and/or a HP total DAI field. In addition, when HP PDSCH scheduling includes both CBG-based PDSCHs and TB-based PDSCHs, the HP total DAI field may be configured separately for scheduling of the CBG-based PDSCHs and scheduling of the TB-based PDSCHs. Based on that one total DAI field A related to the second priority (e.g., LP) is related to both scheduling of CBG-based PDSCHs with the second priority and scheduling of TB-based PDSCHs with the second priority, the BS may determine the size and value (field state) of the one total DAI field A. For example, based on that one total DAI field A is related to both scheduling of CBG-based PDSCHs with the second priority and scheduling of TB-based PDSCHs with the second priority, the BS may set the one total DAI field A to be larger than two bits (which is the conventional DAI field size in Rel-15/16 NR). For example, based on that one total DAI field A is related to both scheduling of CBG-based PDSCHs with the second priority and scheduling of TB-based PDSCHs with the second priority, the BS may set the one total DAI field A to (at least) three bits (or more than three bits). For one total DAI field A, a value obtained by performing modulo K operation on either the number M1 of times that TB-based PDSCHs are scheduled or the number M2 of times that CBG-based PDSCHs are scheduled may be configured. Assuming that the size of the total DAI field A is L, the equation of $K = 2^L$ may be satisfied. For example, when L = 3, the total DAI field A may be configured based on the modulo 8 operation. For example, when yy1 obtained by performing the modulo 8 operation on M1 is different from yy2 obtained by performing the modulo 8 operation on M2, the BS may set either yy1 or yy2 to the total DAI field A based on the values of M1 and M2. For example, the BS may set either yy1 or yy2 to the total DAI field A based on a larger one of M1 and M2. Alternatively, when yy1 ≠ yy2, the BS may set either yy1 or yy2 to the total DAI field A based on the values of yy1 and yy2. For example, the BS may set either yy1 or yy2 to the total DAI field A based on a larger one of yy1 and yy2. Alternatively, the BS may (always) configure the total DAI field A based on only the number of rounds of scheduling of TB-based PDSCHs. Alternatively, the BS may (always) configure the total DAI field A based on only the number of rounds of scheduling of CBG-based PDSCHs.

For example, the UE may receive DL/UL DCI related to a first priority (e.g., HP) from the BS, and obtain a total DAI field A related to a second priority (e.g., LP) from the corresponding DCI. The UE may determine a Type-2 A/N codebook based on the DCI (B 15 of FIG. 12) and report the Type-2 A/N codebook to the BS (B20 of FIG. 12). The Type2 A/N codebook reported by the UE may include at least one of a first sub-codebook for HP (CBG/TB-based) PDSCHs, a second sub-codebook for LP CBG-based PDSCHs, or a third sub-codebook for LP TB-based PDSCHs. The payload size of each of the second and third sub-codebooks may be determined based on the total DAI field A. The size of the first sub-codebook may be determined based on at least one of a HP counter DAI field and/or a HP total DAI field. Based on that one total DAI field A related to the second priority (e.g., LP) is related to both scheduling of CBG-based PDSCHs with the second priority and scheduling of TB-based PDSCHs with the second priority, the UE may analyze the size and value (field state) of the one total DAI field A when decoding DCI. For example, based on that one total DAI field A related to the second priority (e.g., LP) is related to both scheduling of CBG-based PDSCHs with the second priority and scheduling of TB-based PDSCHs with the second priority, the UE may determine the one total DAI field A to be larger than two bits (which is the conventional DAI field size in Rel-15/16 NR). For example, based on that one total DAI field A related to the second priority (e.g., LP) is related to both scheduling of CBG-based PDSCHs with the second priority and scheduling of TB-based PDSCHs with the second priority, the UE may assume that the one total DAI field A is composed of (at least) three bits (or more than three bits). For one total DAI field A, a value obtained by performing modulo K operation on either the number M1 of times that TB-based PDSCHs are scheduled or the number M2 of times that CBG-based PDSCHs are scheduled may be configured. Assuming that the size of the total DAI field A is L, the equation of $K = 2^L$ may be satisfied. For example, when L = 3, the total DAI field A may be configured based on the modulo 8 operation. For example, when yy1 obtained by performing the modulo 8 operation on M1 is different from yy2 obtained by performing the modulo 8 operation on M2, the UE may assume that the BS may set either yy1 or yy2 to the total DAI field A based on the values of M1 and M2. Alternatively, when yy1 ≠ yy2, the UE may assume that the BS may set either yy1 or yy2 to the total DAI field A based on the values of yy1 and yy2.

ⓐ As a specific example therefor, when no DCI/PDSCH is received for a specific PDSCH type (e.g., TB-based PDSCH or CBG-based PDSCH), if a value above 4 (and below 8) is indicated by the total DAI field A, the UE may configure no HARQ-ACK sub-codebook for the corresponding PDSCH type (by determining zero bits). For example, when the UE does not receive DCI for scheduling LP CBG-based PDSCHs even once, the UE may determine the payload size of an A/N sub-codebook for the LP CBG-based PDSCHs to be zero based on receiving the total DAI field A indicating above a specific value. In addition, the UE may determine the payload size of an A/N sub-codebook for LP TB-based PDSCHs (to be zero bits or one bit or more) based on the indicated total DAI field A. As another example, when the UE does not receive DCI for scheduling LP TB-based PDSCHs even once, the UE may determine the payload size of an A/N sub-codebook for the LP TB-based PDSCHs to be zero based on receiving the total DAI field A indicating above a specific value. In addition, the UE may determine the payload size of an A/N sub-codebook for LP CBG-based PDSCHs (to be zero bits or one bit or more) based on the indicated total DAI field A.

v. Opt 5: For a LP PDSCH, when CBG-based PDSCH transmission is not configured but only TB-based PDSCH transmission is configured, one total DAI field/information for LP TB-based PDSCHs may be configured/indicated by HP DCI. For a LP PDSCH, when not only TB-based PDSCH transmission but also CBG-based PDSCH transmission are configured, the A/N payload size indication field/information for all LP (TB/CBG-based) PDSCHs may be configured/indicated by HP DCI. Accordingly, even when CBG-based PDSCH transmission is configured for a LP PDSCH, the reliability of HP DCI transmission may be maintained by preventing the payload size of HP DCI from increasing excessively (by adding the total DAI field for LP CBG-based PDSCHs), and DL resource overhead required for PDSCH retransmission may be reduced by avoiding unconditionally dropping HARQ-ACK transmission for the LP CBG-based PDSCHs.

D. As another example, when a Type-2 codebook is configured for a LP HARQ-ACK, total DAI information on the corresponding LP HARQ-ACK may be indicated by HP DL/UL DCI as follows.

i. Opt 1: A total DAI field/information may be configured/indicated only for a HP PDSCH (or HARQ-ACK codebook related thereto) in HP DL/UL DCI as in the prior art. However, no total DAI field/information may be configured/indicated for a LP PDSCH (or HARQ-ACK codebook related thereto).

1. In this case, when the LP HARQ-ACK overlaps with a HP HARQ-ACK on the same PUCCH/PUSCH (indicated/scheduled by HP DCI) (or when the LP HARQ-ACK transmission overlaps with HP PUCCH/PUSCH resources), the configuration and (multiplexing) transmission of the HARQ-ACK (sub-codebook) for the LP PDSCH may be dropped (this is defined as Opt 1-1).

2. Alternatively, when the LP HARQ-ACK is multiplexed with a HP HARQ-ACK on the same PUCCH/PUSCH (indicated/scheduled by HP DCI) (or when the LP HARQ-ACK is multiplexed with a HP PUCCH/PUSCH), the HARQ-ACK codebook (size) for the LP PDSCH may be configured (determined) based on the last counter DAI (or total DAI) value (related to the LP PDSCH) indicated by last received LP DL DCI (this is defined as Opt 1-2).

ⓐ In the same situation as above, if the UE receives LP UL DCI including/indicating a UL DAI value (related to the LP PDSCH), the UE may configure (determine) the HARQ-ACK sub-codebook (size) for the LP PDSCH based on the corresponding UL DAI value (rather than the counter/total DAI value indicated by the LP DL DCI).

3. As another method, which one of Opt 1-1 and Opt 1-2 described above is applied may be configured through RRC (or indicated by DCI).

ii. Opt 2: When only one total DAI field B is configured in HP DL/UL DCI (for each PDSCH type (e.g., TB-based PDSCH or CBG-based PDSCH)) as in the prior art (if a Type-2 codebook is also configured for a HP HARQ-ACK), the UE may be configured to apply one total DAI value indicated by the one total DAI field B to each of a HP PDSCH (or HARQ-ACK codebook related thereto) and a LP PDSCH (corresponding HARQ-ACK codebook).

1. In this case, it is assumed that when the total DAI field B is consists of two bits as in the prior art, the number of HP PDSCHs scheduled by the BS is M1 = x1 * 4 + y1 (i.e., total DAI calculation for M1 is {x1 mod 4 + y1}) and the number of LP PDSCHs is M2 = x2 * 4 + y2 (i.e., total DAI calculation for M2 is {x2 mod 4 + y2}). When y1 and y2 have different values (and when one of y1 and y2 is indicated by the total DAI field B), if the UE fails to detect DCI, there may be misalignment (between the UE and BS) for the configuration/size of HARQ-ACK codebooks for the HP PDSCH and/or LP PDSCH. This may be similar to the misalignment problem that may occur when the total DAI field A is used in common for LP CBG-based PDSCHs and LP TB-based PDSCHs, which is described above with reference to FIG. 11. Referring again to FIG. 11, it is assumed that on a specific PDCCH monitoring occasion, the number of scheduled HP PDSCHs, M1 is 6 and the number of scheduled LP PDSCHs, M2 is 4. The BS may transmit one total DAI field B to be applied to the HP PDSCHs and LP PDSCHs in HP DCI. In this case, it is assumed that the value of the total DAI field B is determined as y1 = 2 based on M1 = 6. When the following relationship: total DAI field B = 2 is applied to M1, the BS/UE may determine the payload of an A/N (sub) codebook for the HP PDSCHs based on M1 = 6. On the other hand, when the following relationship: total DAI field B = 2 is applied to M2, the BS may expect that the UE will determine the payload of an A/N (sub) codebook for the LP PDSCHs based on M2 = 6. The fact that the BS expects that the payload of the A/N (sub) codebook for the CBG-based PDSCHs is determined with M2 = 6, which is greater than the actual value, M2 = 4, it may mean that the BS expects that the UE will report NACKs all for two (= 6-4) LP PDSCHs that are not actually performed. If the UE misses no DCIs scheduling LP PDSCHs, misalignment in the HARQ-ACK payload may not occur between the UE and BS. However, if the UE misses two or more of the DCIs scheduling the LP PDSCHS (which are consecutive in terms of the count DAI), misalignment in the HARQ-ACK payload may occur. For example, when a total of four DCIs: {DCI1, DCI2, DCI3, DCI4} are transmitted by the BS but {DCI5, DCI6} are not transmitted by the BS, the BS may assume that the UE misses {DCI5, DCI6}. On the other hand, if the UE actually successfully receives {DCI1, DCI2} but misses {DCI3, DCI4}, the UE may erroneously determine that M2 = 2 based on {DCI1, DCI2, and HP DCI} and then determine the payload size of the A/N (sub) codebook for the LP PDSCHs based on M2 = 2. That is, since the BS expects that the payload size of the A/N (sub) codebook for the LP PDSCHs will be determined based on M2 = 6, and the UE determines the payload size of the A/N (sub) codebook for the LP PDSCHs based on M2 = 2, misalignment may occur between the BS and UE. As described above, misalignment may occur even if detection of two DCIs fails. In the above description, it is assumed that M1 and y1 are related to HP PDSCHs and M2 and y2 are related to LP PDSCHs. However, this is for convenience of explanation, and the present disclosure is not limited thereto. For example, contrary to the above example, M1 and y1 may be related to LP PDSCHs, and M2 and y2 may be related to HP PDSCHs.

2. To prevent the above problem, the total DAI field B may consist of three bits (unlike the prior art) (for example, the total DAI value indicated by the total DAI field B may be determined based on modulo 8 operation). Accordingly, if the value indicated by the total DAI field B is Y, the UE may configure a HARQ-ACK codebook (size) for each PDSCH priority (e.g., HP PDSCH or LP PDSCH) based on the minimum value of (X*8 + Y) equal to or greater than the accumulated order value (e.g., accumulated counter DAI value) of DCI/PDSCH that is last scheduled/received for each of the HP PDSCH and LP PDSCH (total DAI calculation for (X*8 + Y) is {X mod 8 + Y}). For example, the BS may transmit one total DAI field B related to both a first priority (e.g., HP) and a second priority (e.g., LP) in DL/UL DCI related to the first priority (B05 of FIG. 12). Based on that one total DAI field B is related to both scheduling of PDSCHs with the first priority and scheduling of PDSCHs with the second priority, the BS may determine the size and value (field state) of the one total DAI field B. For example, based on that one total DAI field B is related to both scheduling of PDSCHs with the first priority and scheduling of PDSCHs with the second priority, the BS may set the one total DAI field B to be larger than two bits (which is the conventional DAI field size in Rel-15/16 NR). For example, based on that one total DAI field B is related to both scheduling of PDSCHs with the first priority and scheduling of PDSCHs with the second priority, the BS may set the one total DAI field B to (at least) three bits (or more than three bits). For one total DAI field B, a value obtained by performing modulo K operation on either the number M1 of times that PDSCHs with the first priority are scheduled or the number M2 of times that PDSCHs with the second priority are scheduled may be configured. Assuming that the size of the total DAI field B is L, the equation of $K = 2^L$ may be satisfied. For example, when L = 3, the total DAI field B may be configured based on the modulo 8 operation. For example, when yy1 obtained by performing the modulo 8 operation on M1 is different from yy2 obtained by performing the modulo 8 operation on M2, the BS may set either yy1 or yy2 to the total DAI field B based on the values of M1 and M2. For example, the BS may set either yy1 or yy2 to the total DAI field B based on a larger one of M1 and M2. Alternatively, when yy1 ≠ yy2, the BS may set either yy1 or yy2 to the total DAI field B based on the values of yy1 and yy2. For example, the BS may set either yy1 or yy2 to the total DAI field B based on a larger one of yy1 and yy2. Alternatively, the BS may (always) configure the total DAI field B based on only the number of rounds that PDSCHs with the first priority are scheduled. Alternatively, the BS may (always) configure the total DAI field B based on only the number of rounds that PDSCHs with the second priority are scheduled. For example, the UE may receive DL/LTL DCI related to a first priority (e.g., HP) from the BS, and obtain a total DAI field B related to a second priority (e.g., LP) from the corresponding DCI. The UE may determine a Type-2 A/N codebook based on the DCI (B 15 of FIG. 12) and report the Type-2 A/N codebook to the BS (B20 of FIG. 12). The Type2 A/N codebook reported by the UE may include at least one of a first sub-codebook for HP (CBG/TB-based) PDSCHs or a second sub-codebook for LP (CBG/TB-based) PDSCHs. The payload size of each of the first and second sub-codebooks may be determined based on the total DAI field B. Based on that one total DAI field B is related to both scheduling of PDSCHs with the first priority and scheduling of PDSCHs with the second priority, the UE may analyze the size and value (field state) of the one total DAI field B when decoding DCI. For example, based on that one total DAI field B is related to both scheduling of PDSCHs with the first priority and scheduling of PDSCHs with the second priority, one total DAI field B is related to both scheduling of CBG-based PDSCHs with the second priority and scheduling of TB-based PDSCHs with the second priority, the UE may determine the one total DAI field B to be larger than two bits (which is the conventional DAI field size in Rel-15/16 NR). For example, based on that one total DAI field B is related to both scheduling of PDSCHs with the first priority and scheduling of PDSCHs with the second priority, the UE may assume that the one total DAI field B is composed of (at least) three bits (or more than three bits). For one total DAI field B, a value obtained by performing modulo K operation on either the number M1 of times that PDSCHs with the first priority are scheduled or the number M2 of times that PDSCHs with the second priority are scheduled may be configured. Assuming that the size of the total DAI field B is L, the equation of $K = 2^L$ may be satisfied. For example, when L = 3, the total DAI field B may be configured based on the modulo 8 operation. For example, when yy1 obtained by performing the modulo 8 operation on M1 is different from yy2 obtained by performing the modulo 8 operation on M2, the UE may assume that the BS may set either yy1 or yy2 to the total DAI field B based on the values of M1 and M2. Alternatively, when yy1 ≠ yy2, the UE may assume that the BS may set either yy1 or yy2 to the total DAI field B based on the values of yy1 and yy2.

ⓐ In this case, when no DCI/PDSCH is received for a specific PDSCH priority (e.g., HP PDSCH or LP PDSCH), if a value above 4 (and below 8) is indicated by the total DAI field B, the UE may configure no HARQ-ACK sub-codebook for the corresponding PDSCH priority (by determining zero bits). For example, when the UE does not receive DCI for scheduling LP PDSCHs even once, the UE may determine the payload size of an A/N sub-codebook for the LP PDSCHs to be zero based on receiving the total DAI field B indicating above a specific value. In addition, the UE may determine the payload size of an A/N sub-codebook for HP PDSCHs (to be zero bits or one bit or more) based on the indicated total DAI field B. As another example, when the UE does not receive DCI for scheduling HP PDSCHs even once, the UE may determine the payload size of an A/N sub-codebook for the HP PDSCHs to be zero based on receiving the total DAI field B indicating above a specific value. In addition, the UE may determine the payload size of an A/N sub-codebook for LP PDSCHs (to be zero bits or one bit or more) based on the indicated total DAI field B.

E. As another example, when a Type-1 codebook is configured for a LP HARQ-ACK, the candidate payload size may be configured to include three values: {nothing case, fallback case, full case}. Alternatively, the candidate payload size may be configured to include two values: {nothing or fallback case, full case} or {nothing case, fallback or full case}. In this case, the nothing/fallback/full cases may be defined as follows.

### i. Fallback Case

1. When A/N feedback needs to be transmitted in a specific slot, if a PDSCH, which is for the A/N feedback transmission in the specific slot, satisfies the following conditions, or if DCI that configures/indicates the specific slot as an A/N feedback transmission timing satisfies the following conditions:

ⓐ When there is only one PDSCH on a Pcell scheduled with fallback DCI format 1_0 indicating downlink assignment index (DAI) = 1,
ⓑ When there is only one PDCCH based on fallback DCI format 1_0 that commands SPS PDSCH release while indicating DAI = 1, or
ⓒ When there are only SPS PDSCH(s).

2. The UE may configure/transmit A/N feedback only for the PDSCH received on the Pcell (ⓐ Pcell PDSCH), the SPS PDSCH release PDCCH (ⓑ SPS release), and/or ⓒ the SPS PDSCH(s) (rather than the full payload) in the specific slot (hereinafter, an A/N payload configured in the fallback case is referred to as a fallback payload for convenience).

### ii. Nothing Case

1. If there is no PDSCH related to A/N feedback transmission in a specific slot, or if there is no DCI that configures/indicates the specific slot as an A/N feedback transmission timing, the UE may not configure/transmit A/N feedback in the specific slot (hereinafter, an A/N payload configured in the nothing case is referred to as a zero-bit payload for convenience).

### iii. Full Case

1. The full case refers to a case that does not belong to either the fallback case or the nothing case. In the full case, the UE may configure/transmit a full payload based on all combinations of {K1, TDRA} as A/N feedback as described above.

iv. For example, when the candidate payload size is configured to have three values: {nothing case, fallback case, full case}, if the nothing case is indicated by DCI, the UE may not configure/transmit LP A/N feedback by determining the LP A/N feedback as zero bits. If the fallback case is indicated by DCI, the UE may configure/transmit LP A/N feedback with only one bit or SPS HARQ-ACK bit(s). If the full case is indicated by DCI, the UE may configure/transmit LP A/N feedback with a full payload based on all combinations of {K1, TDRA}.
v. As another example, when the candidate payload size is configured to have two values: {nothing or fallback case, full case}, if the nothing or fallback case is indicated by DCI, the UE may configure/transmit LP A/N feedback with only one bit (corresponding to DAI = 1) or SPS HARQ-ACK bit(s). Specifically, Alt 1) even if the UE receives no LP DCI/PDSCH, the UE may configure/transmit the LP A/N feedback with the one bit (corresponding to DAI = 1), or Alt 2) the UE may determine zero bits and drop the LP A/N feedback without configuring/transmitting the LP A/N feedback (if the UE receives no LP DCI/PDSCH). If the full case is indicated by DCI, the UE may configure/transmit LP A/N feedback with a full payload based on all combinations of {K1, TDRA}. On the other hand, when the SPS HARQ-ACK bit(s) are present in addition to the one bit corresponding to DAI = 1, the BS may indicate the full case in DCI.
vi. As another example, when the candidate payload size is configured to have two values: {nothing case, fallback or full case}, if the nothing case is indicated by DCI, the UE may not configure/transmit LP A/N feedback by determining the LP A/N feedback as zero bits. If the fallback or full case is indicated by DCI, the UE may operate as follows.

1. Alt 1) In the actual fallback case, the UE may configure/transmit LP A/N feedback only with one bit (corresponding to DAI = 1) or SPS HARQ-ACK bit(s) (in this case, even if no LP DCI/PDSCH is received, the UE may configure/transmit the LP A/N feedback with the one bit (corresponding to DAI = 1)). In the actual full case, the UE may configure/transmit LP A/N feedback with a full payload based on all combinations of {K1, TDRA}.

2. Alt 2) In the fallback or full case, the UE may configure/transmit LP A/N feedback with a full payload based on all combinations of {K1, TDRA} (even if no LP DCI/PDSCH is received).

vii. The operation of configuring/indicating one of a plurality of candidate payload sizes (e.g., two, three, or four candidate payload sizes) with the payload size of a LP HARQ-ACK as described above (or below) may not be configured/indicated in/by HP DL/UL DCI.

1. In this case, when the LP HARQ-ACK overlaps with a HP HARQ-ACK on the same PUCCH/PUSCH (indicated/scheduled by HP DCI) (or when the LP HARQ-ACK transmission overlaps with HP PUCCH/PUSCH resources), the configuration and (multiplexing) transmission of the HARQ-ACK (sub-codebook) for a LP PDSCH may be dropped (this is defined as Opt 1-1).

2. Alternatively, when the LP HARQ-ACK is multiplexed with a HP HARQ-ACK on the same PUCCH/PUSCH (indicated/scheduled by HP DCI) (or when the LP HARQ-ACK is multiplexed with a HP PUCCH/PUSCH), the UE may be configure a HARQ-ACK payload corresponding to one of the fallback, nothing, and full cases that depends on DCI/PDSCH received by the UE in order to determine the HARQ-ACK codebook (size) for a LP PDSCH (this is defined as Opt 1-2).

ⓐ In the same situation as above, if the UE receives LP UL DCI including/indicating a UL DAI value (related to a LP PDSCH), the UE may configure (determine) the HARQ-ACK sub-codebook (size) for the LP PDSCH based on the corresponding UL DAI value.

3. As another method, which one of Opt 1-1 and Opt 1-2 described above is applied may be configured through RRC (or indicated by DCI).

F. As another example, when a Type-1 codebook is configured for a LP HARQ-ACK, the candidate payload size may be configured to include four values: {nothing case, fallback case, X bits, full case}. Alternatively, the candidate payload size may be configured to include four values: {nothing case, X bits, Y bits, full case} (where X < Y). Alternatively, the candidate payload size may be configured to include four values: {nothing or fallback case, X bits, Y bits, full case} (where X < Y).

i. When a payload size (e.g., $P_d$ bits, for example, X bits, Y bits, or full case) indicated by DCI is greater than an actual (LP HARQ-ACK) payload size (e.g., $P_u$ bits, for example, nothing case or fallback case) calculated by the UE (based on actual PDSCH reception), the UE may configure a payload corresponding to the indicated size, $P_d$ bits (on a PUCCH/PUSCH). The UE may map the actual payload to specific $P_u$ bits (e.g., first $P_u$ bits) in the PUCCH/PUSCH payload and map NACKs to all the remaining {$P_d$ - $P_u$} bits (e.g., last {$P_d$ - $P_u$} bits) are all NACKs can be mapped.

i. When a payload size (e.g., $P_d$ bits, for example, nothing case, fallback case, X bits, or Y bits) indicated by DCI is smaller than an actual (LP HARQ-ACK) payload size (e.g., $P_u$ bits, for example, full case) calculated by the UE (based on actual PDSCH reception), the UE may configure a payload corresponding to the indicated size, $P_d$ bits (on a PUCCH/PUSCH). The UE may map specific $P_d$ bits (e.g., first $P_d$ bits) of the actual payload (on the PUCCH/PUSCH) and drop transmission of the remaining {$P_d$ - $P_u$} bits (e.g., last {$P_u$ - $P_d$} bits) (in the actual payload).

G. Accordingly, based on the combination of a LP HARQ-ACK payload size and a HP HARQ-ACK payload size determined based on a payload size indicated by DCI (for example, the total payload size obtained by adding the two sizes), the UE may 1) select/determine a PUCCH resource (set) to be used for multiplexing transmission of the corresponding HP HARQ-ACK and LP HARQ-ACK and 2) determine the minimum number of RBs to be used for actual UCI transmission on the selected PUCCH resources (that is, the UE may perform RB adaptation).

Hereinafter, an implementation example of a signal transmission and reception method according to an embodiment of the present disclosure will be described with reference to FIG. 12. FIG. 12 is for a better understanding of the above-described examples, and the scope of the present disclosure is not limited to the following description. The redundant description may be omitted, and the above-described content may be referred to if necessary.

The BS may transmit DCI including a priority indicator and at least one DAI (B05). The UE may receive the DCI including the priority indicator and the at least one DAI (B05) and then decode the DCI (B 10).

The UE may determine a HARQ-ACK codebook based on the DCI (B15). In a state where the priority indicator included in the DCI indicates a first priority but the DCI includes a DAI related to a second priority different from the first priority, the UE may determine a first sub-codebook related to the first priority and a second sub-codebook related to the second priority and determine the HARQ-ACK codebook based on the first sub-codebook and the second sub-codebook.

The UE may transmit a UL signal including the HARQ-ACK codebook (B20).

When the DCI includes the DAI related to the second priority different from the first priority, the BS may determine the payload size of each of the first sub-codebook related to the first priority and the second sub-codebook related to the second priority and obtain the first sub-codebook and the second sub-codebook from the HARQ-ACK codebook based on the payload size of each of the first sub-codebook and the second sub-codebook.

The second priority may be lower than the first priority.

The DAI related to the second priority may represent the accumulated scheduling number of TB-based PDSCHs for which the second priority is indicated or no priority is indicated.

The size of ACK/NACK bits for the TB-based PDSCHs for which the second priority or no priority is indicated may be determined based on the DAI related to the second priority. The second sub-codebook may be determined based on the determination of the size of the ACK/NACK bits for the TB-based PDSCHs.

The DAI related to the second priority may represent only the accumulated scheduling number of the TB-based PDSCHs for which the second priority is indicated or no priority is indicated, except for the accumulated scheduling number of CBG-based PDSCHs for which the second priority is indicated or no priority is indicated.

The UE may omit ACK/NACK bits for the CBG-based PDSCHs for which the second priority or no priority is indicated from the HARQ-ACK codebook.

The ACK/NACK bits for the CBG-based PDSCHs for which the second priority or no priority is indicated may be determined based on DL grant DCI last received by the UE among DL grant DCIs scheduling the CBG-based PDSCHs for which the second priority or no priority is indicated, and the HARQ-ACK codebook may be configured to include the determined ACK/NACK bits.

The DCI may include both a DAI related to the first priority and the DAI related to the second priority.

The DAI related to the second priority may include a total DAI representing the total number of times of DL scheduling related to the second priority at the current time.

The DCI may be DL grant DCI for DL scheduling related to the first priority or UL grant DCI for scheduling of the UL signal including a PUSCH.

The HARQ-ACK codebook may be a Type-2 HARQ-ACK codebook in a 3GPP-based wireless communication system.

The UE may determine the HARQ-ACK codebook by concatenating the first sub-codebook related to the first priority and the second sub-codebook related to the second priority.

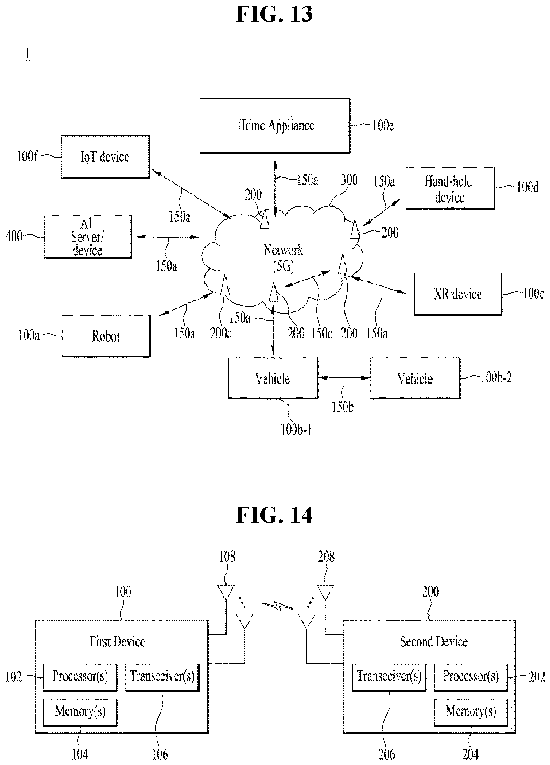

FIG. 13 illustrates a communication system 1 applied to the present disclosure.

Referring to FIG. 13, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

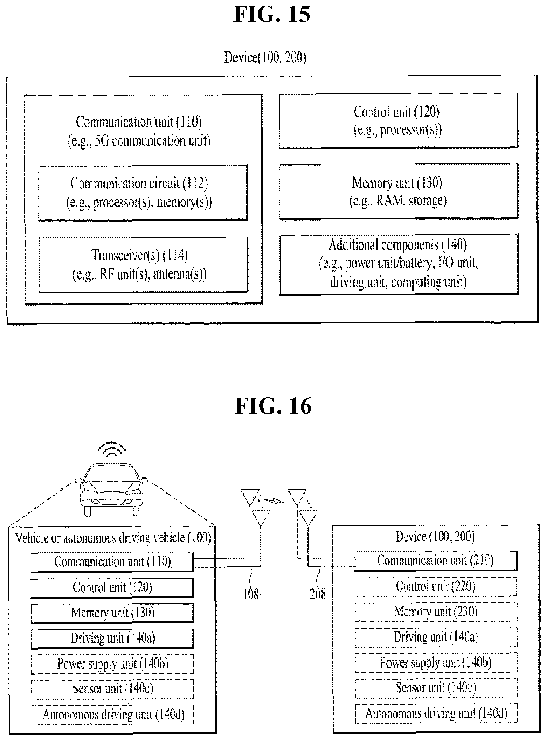

FIG. 15 illustrates another example of a wireless device applied to the present disclosure. The wireless device may be implemented in various forms according to a usecase/service (refer to FIG. 13).

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 16 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 16, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

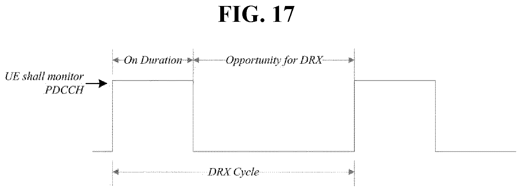

FIG. 17 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 17, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 9 describes a DRX operation of a UE (in the RRC_CONNECTED state). Referring to Table 9, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods, as illustrated in FIG. 5.

[Table 9]

|  | Type of signals | UE procedure |
|---|---|---|
| 1st step | RRC signalling(MAC-Cell GroupConfig) | - Receive DRX configuration information |
| 2nd Step | MAC CE((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-Timer-DL is running, the UE performs PDCCH monitoring in each PDCCH occasion, staying in the awake state.

The above-described embodiments correspond to combinations of elements and features of the present disclosure in prescribed forms. In addition, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. In addition, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of transmitting a signal by a user equipment (UE) in a wireless communication system, the method comprising:

   receiving downlink control information (DCI) including a priority indicator and at least one downlink assignment index (DAI);
   determining a hybrid automatic repeat request acknowledgment (HARQ-ACK) codebook based on the DCI; and
   transmitting an uplink (UL) signal including the HARQ-ACK codebook,
   wherein based on that the priority indicator included in the DCI indicates a first priority but the DCI includes a DAI related to a second priority different from the first priority, the UE:

   - determines a first sub-codebook related to the first priority and a second sub-codebook related to the second priority; and
   - determines the HARQ-ACK codebook based on the first sub-codebook and the second sub-codebook.

2. The method of claim 1,

   wherein the second priority is lower than the first priority, and
   wherein the DAI related to the second priority represents an accumulated scheduling number of transport block-based physical downlink shared channels (TB-based PDSCHs) for which the second priority or no priority is indicated.

3. The method of claim 2,

   wherein a size of acknowledgement/negative acknowledgement (ACK/NACK) bits for the TB-based PDSCHs for which the second priority is indicated or no priority is indicated is determined based on the DAI related to the second priority, and
   wherein the second sub-codebook is determined based on the determination of the size of the ACK/NACK bits for the TB-based PDSCHs.

4. The method of claim 2, wherein the DAI related to the second priority represents only the accumulated scheduling number of the TB-based PDSCHs for which the second priority is indicated or no priority is indicated, except for an accumulated scheduling number of code block group-based physical downlink shared channels (CBG-based PDSCHs) for which the second priority is indicated or no priority is indicated.

5. The method of claim 4, wherein the UE omits acknowledgement/negative acknowledgement (ACK/NACK) bits for the CBG-based PDSCHs for which the second priority or no priority is indicated from the HARQ-ACK codebook.

6. The method of claim 4, wherein acknowledgement/negative acknowledgement (ACK/NACK) bits for the CBG-based PDSCHs for which the second priority or no priority is indicated are determined based on last downlink (DL) grant DCI received by the UE among DL grant DCIs scheduling the CBG-based PDSCHs for which the second priority or no priority is indicated, and
   wherein the HARQ-ACK codebook is configured to include the determined ACK/NACK bits.

7. The method of claim 1, wherein the DCI includes both a DAI related to the first priority and the DAI related to the second priority.

8. The method of claim 1, wherein the DAI related to the second priority includes a total DAI representing a total downlink (DL) scheduling number related to the second priority at a corresponding timing.

9. The method of claim 1, wherein the DCI is downlink (DL) grant DCI for DL scheduling related to the first priority or UL grant DCI for scheduling of the UL signal including a physical uplink shared channel (PUSCH).

10. The method of claim 1, wherein the HARQ-ACK codebook is a Type-2 HARQ-ACK codebook in a 3rd generation partnership project (3GPP) based wireless communication system, and
   wherein the UE is configured to determine the HARQ-ACK codebook by concatenating the first sub-codebook related to the first priority and the second sub-codebook related to the second priority.

11. A processor-readable storage medium configured to store instructions for performing the method of claim 1.

12. A device configured to control a user equipment (UE) for wireless communication, the device comprising:

   a memory configured to store instructions; and
   a processor configured to perform operations by executing the instructions,
   wherein the operations performed by the processor comprise:

      receiving downlink control information (DCI) including a priority indicator and at least one downlink assignment index (DAI);
      determining a hybrid automatic repeat request acknowledgment (HARQ-ACK) codebook based on the DCI; and
      transmitting an uplink (UL) signal including the HARQ-ACK codebook, and
      wherein based on that the priority indicator included in the DCI indicates a first priority but the DCI includes a DAI related to a second priority different from the first priority, the processor is configured to:

         - determine a first sub-codebook related to the first priority and a second sub-codebook related to the second priority; and
         - determine the HARQ-ACK codebook based on the first sub-codebook and the second sub-codebook.

13. A user equipment (UE) for wireless communication, the UE comprising:

   a transceiver; and
   a processor configured to:

      control the transceiver to receive downlink control information (DCI) including a priority indicator and at least one downlink assignment index (DAI);
      determine a hybrid automatic repeat request acknowledgment (HARQ-ACK) codebook based on the DCI; and
      control the transceiver to transmit an uplink (UL) signal including the HARQ-ACK codebook,
      wherein based on that the priority indicator included in the DCI indicates a first priority but the DCI includes a DAI related to a second priority different from the first priority, the processor is configured to:

         - determine a first sub-codebook related to the first priority and a second sub-codebook related to the second priority; and
         - determine the HARQ-ACK codebook based on the first sub-codebook and the second sub-codebook.

14. A method of receiving a signal by a base station (BS) in a wireless communication system, the method comprising:

   transmitting downlink control information (DCI) including a priority indicator and at least one downlink assignment index (DAI); and
   receiving an uplink (UL) signal including a hybrid automatic repeat request acknowledgment (HARQ-ACK) codebook based on the DCI,
   wherein based on that the priority indicator included in the DCI indicates a first priority but the DCI includes a DAI related to a second priority different from the first priority, the BS:

      - determines a payload size of each of a first sub-codebook related to the first priority and a second sub-codebook related to the second priority; and
      - obtains the first sub-codebook and the second sub-codebook from the HARQ-ACK codebook based on the payload size of each of the first sub-codebook and the second sub-codebook.

**15.** A base station (BS) for wireless communication, the BS comprising:

a transceiver; and
a processor configured to control the transceiver to:

transmit downlink control information (DCI) including a priority indicator and at least one downlink assignment index (DAI); and
receive an uplink (UL) signal including a hybrid automatic repeat request acknowledgment (HARQ-ACK) codebook based on the DCI,
wherein based on that the priority indicator included in the DCI indicates a first priority but the DCI includes a DAI related to a second priority different from the first priority, the processor is configured to:

- determine a payload size of each of a first sub-codebook related to the first priority and a second sub-codebook related to the second priority; and
- obtain the first sub-codebook and the second sub-codebook from the HARQ-ACK codebook based on the payload size of each of the first sub-codebook and the second sub-codebook.

# FIG. 1

| Initial Cell Search | System Information Reception | Random Access Procedure | General DL/UL Tx/Rx S18 |

PSS/SSS & [DLRS] & PBCH

PDCCH/ PDSCH (BCCH)

PRACH

PDCCH/ PDSCH

PRACH

PDCCH/ PDSCH

PDCCH/ PDSCH

PUSCH/ PUCCH

S11    S12    S13    S14    S15    S16    S17    • DL/UL ACK/NACK
• UE CQI/PMI/Rank Report
using PUSCH and PUCCH

# FIG. 2

...... One Frame (10ms) ......

...... Half-Frame (5ms)    Half-Frame (5ms) ......

...... Subframe 0 (1ms) ...... Subframe 4 (1ms)    Subframe 5 (1ms) ...... Subframe 9 (1ms) ......

Subframe (1ms)

| 15KHz | Slot (14 symbols) |

1ms

| 30KHz | Slot 0 (14 symbols) | Slot 1 |

500us

| 60KHz | Slot 0 (14 symbols) | Slot 1 | Slot 2 | Slot 3 |

250us

| 120KHz | Slot 0 (14 symbols) | Slot 1 | Slot 2 | Slot 3 | Slot 4 | Slot 5 | Slot 6 | Slot 7 |

125us

# FIG. 3

# FIG. 4

# FIG. 5

DL assingment-to-PDSCH offset (K0)

slot

PDSCH-to-HARQ-ACK reporting offset (K1)

# FIG. 6

UL grant-to-PUSCH offset (K2)

## FIG. 7

Time →

|  | 0 | 1 | 2 | 3 | 4 | 5 | 6 | 7 | 8 | 9 | 10 | 11 | 12 | 13 |

PUSCH DM-RS

HARQ-ACK RE

CSI part 1

CSI part 2

UL-SCH

Freq.

# FIG. 8

Time (PDCCH monitoring occasions) →

| | t0 | t1 | t2 | t3 | t4 | t5 | t6 |
|---|---|---|---|---|---|---|---|
| Carrier #a<br>Configured with Priority Indication | [HP Scheduled]<br>(HP Counter = 1)<br>HP Total = 1<br>LP Total = 1 | [HP Scheduled]<br>(HP Counter = 2)<br>HP Total = 3<br>LP Total = 2 | None | None | None | None | [HP Scheduled]<br>(HP Counter = 2)<br>HP Total = 2<br>LP Total = 2 |
| Carrier #b<br>Configured with Priority Indication | None | [HP Scheduled]<br>(HP Counter = 3)<br>HP Total = 3<br>LP Total = 2 | None | [HP Scheduled]<br>(HP Counter = 0)<br>HP Total = 0<br>LP Total = 1 | None | None | None |
| Carrier #c<br>Configured with Priority Indication | [LP Scheduled]<br>LP Total = 1 | None | [LP Scheduled]<br>LP Total = 3 | [LP Scheduled]<br>LP Total = 1 | None | [HP Scheduled]<br>(HP Counter = 1)<br>HP Total = 1<br>LP Total = 2 | None |
| Carrier #d<br>(No Priority Indication) | None | [scheduled] | None | [scheduled] | [scheduled] | None | None |

EP 4 280 499 A1

# FIG. 9

Time (PDCCH monitoring occasions) →

| | t0 | t1 | t2 | t3 | t4 | t5 | t6 |
|---|---|---|---|---|---|---|---|
| Carrier #a<br>Configured with Priority Indication | [HP Scheduled]<br>(HP Counter = 1)<br>HP Total = 1<br>LP Total (TB) = 1 | [HP Scheduled]<br>(HP Counter = 2)<br>HP Total = 3<br>LP Total (TB) = 1 | None | None | None | None | [HP Scheduled]<br>(HP Counter = 2)<br>HP Total = 2<br>LP Total (TB)= 1 |
| Carrier #b<br>Configured with Priority Indication | None | [HP Scheduled]<br>(HP Counter = 3)<br>HP Total = 3<br>LP Total (TB) = 1 | None | [HP Scheduled]<br>(HP Counter = 0)<br>HP Total = 0<br>LP Total (TB) = 3 | None | None | None |
| TB based Carrier #c<br>Configured with Priority Indication | [LP Scheduled]<br>LP Total (TB) = 1 | None | [LP Scheduled]<br>LP Total (TB) =2 | [LP Scheduled]<br>LP Total (TB) = 3 | None | [HP Scheduled]<br>(HP Counter = 1)<br>HP Total = 1<br>LP Total (TB)= 1 | None |
| CBG based Carrier #d<br>(No Priority Indication) | None | [scheduled] | None | [scheduled] | [scheduled] | None | None |

**FIG. 10**

Time (PDCCH monitoring occasions)

m0          m1

| | m0 | m1 |
|---|---|---|
| CC #1 | | |
| CC #2 | | |
| CC #3 | | |
| CC #4 | | |
| CC #5 | | (count DAI= 1, total DAI=1) |

(a)   M1 = 1

Time (PDCCH monitoring occasions)

m0          m1

| | m0 | m1 |
|---|---|---|
| CC #1 | | (count DAI= 1, total DAI=1) |
| CC #2 | | (count DAI=2, total DAI=1) |
| CC #3 | | (count DAI=3, total DAI=1) |
| CC #4 | | (count DAI=0, total DAI=1) |
| CC #5 | | (count DAI= 1, total DAI=1) |

(b)   M1 = 5

# FIG. 11

## (a) M1=x1*4+y1

y1= 1       y1= 0

9    8

5  4

1 0

2 3

6

7

actual M1

10

11

y1= 2      y1= 3

## (b) M2=x2*4+y2

y2= 1       y2= 0

9    8 Actual M2

5  4

1 0

UE determines    2 3
payload based on

6

7

BS expected
payload
based on

10

11

y2= 2      y2= 3

### HP DCI
### T-DAI = 2 (for both M1/M2)

### DL DCIs for M2

| | | |
|---|---|---|
| UE determined M2 | M2=1, DCI1(C-DAI=1, T-DAI=2) ⎱ | Transmitted by BS |
| | M2=2, DCI2(C-DAI=2, T-DAI=2) ⎰ | & Detected by UE |
| Actual M2 | M2=3, DCI3(C-DAI=3, T-DAI=2) ⎱ | Transmitted by BS |
| | M2=4, DCI4(C-DAI=0, T-DAI=2) ⎰ | & Missed by UE |
| BS intended M2 | M2=5, DCI5(C-DAI=1, T-DAI=2) ⎱ | Not Transmitted by BS |
| | M2=6, DCI6(C-DAI=2, T-DAI=2) ⎰ | |

EP 4 280 499 A1

**FIG. 12**

EP 4 280 499 A1

# FIG. 13

I

# FIG. 14

EP 4 280 499 A1

# FIG. 15

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 16

Vehicle or autonomous driving vehicle (100)

- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)

- Communication unit (210)
- Control unit (220)
- Memory unit (230)
- Driving unit (140a)
- Power supply unit (140b)
- Sensor unit (140c)
- Autonomous driving unit (140d)

63

# FIG. 17

**EP 4 280 499 A1**

<div align="center">

**INTERNATIONAL SEARCH REPORT**

</div>

| International application No. |
| --- |
| **PCT/KR2022/000323** |

**A. CLASSIFICATION OF SUBJECT MATTER**

**H04L 1/18**(2006.01)i; **H04L 1/00**(2006.01)i; **H04L 5/00**(2006.01)i; **H04W 72/04**(2009.01)i

According to International Patent Classification (IPC) or to both national classification and IPC

**B. FIELDS SEARCHED**

Minimum documentation searched (classification system followed by classification symbols)

H04L 1/18(2006.01); H04L 5/00(2006.01); H04W 72/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 우선순위 지시자(priority indicator), DAI, DCI, HARQ-ACK 코드북(HARQ-ACK codebook), 서브 코드북(sub-codebook)

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111800236 A (VIVO MOBILE COMMUNICATION CO., LTD.) 20 October 2020 (2020-10-20)<br>See claims 1-2. | 1,7-8,10-15 |
| A | | 2-6,9 |
| Y | 5G; NR; Physical layer procedures for control. ETSI TS 138 213 V15.5.0. May 2019.<br>See page 49. | 1,7-8,10-15 |
| Y | SAMSUNG. Discussion on Type-2 HARQ-ACK codebook. R1-2008136, 3GPP TSG RAN WG1 #103-e, e-Meeting. 01 November 2020.<br>See pages 1-10. | 10 |
| A | EP 3657721 A1 (HUAWEI TECHNOLOGIES CO., LTD.) 27 May 2020 (2020-05-27)<br>See paragraphs [0081]-[0092]; and figure 7. | 1-15 |
| A | WO 2020-032779 A1 (LG ELECTRONICS INC.) 13 February 2020 (2020-02-13)<br>See paragraphs [0363]-[0372]; and figures 15-16. | 1-15 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **19 April 2022** | **19 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

65

<table>
<tr><td colspan="3" align="center">INTERNATIONAL SEARCH REPORT<br>Information on patent family members</td><td colspan="2">International application No.<br>**PCT/KR2022/000323**</td></tr>
</table>

| Patent document<br>cited in search report | | | Publication date<br>(day/month/year) | Patent family member(s) | | | Publication date<br>(day/month/year) |
|---|---|---|---|---|---|---|---|
| CN | 111800236 | A | 20 October 2020 | WO | 2021-004280 | A1 | 14 January 2021 |
| EP | 3657721 | A1 | 27 May 2020 | CN | 109639398 | A | 16 April 2019 |
| | | | | CN | 109639398 | B | 31 December 2021 |
| | | | | EP | 3657721 | B1 | 01 September 2021 |
| | | | | US | 2020-0213044 | A1 | 02 July 2020 |
| | | | | WO | 2019-072074 | A1 | 18 April 2019 |
| WO | 2020-032779 | A1 | 13 February 2020 | CN | 112567677 | A | 26 March 2021 |
| | | | | EP | 3817268 | A1 | 05 May 2021 |
| | | | | US | 2021-0160013 | A1 | 27 May 2021 |

Form PCT/ISA/210 (patent family annex) (July 2019)